# EUROPEAN PATENT APPLICATION

(11) **EP 3 540 383 A2**
(43) Date of publication of application: **18.09.2019**
(21) Application number: 19161396.7
(22) Date of filing: 07.03.2019
(51) Int. Cl.: G01F 23/26, A47L 15/42

(54) **SENSOR DEVICE**

(30) Priority: 15.03.2018 IT 201800003631; 15.03.2018 IT 201800003628
(71) Applicant: Control H.T.P. S.r.l., 20900 Monza (MB) (IT)
(72) Inventor: BUZZI, Giorgio, 20900 MONZA (MB) (IT)
(74) Representative: Santonicola, Paolo

(57) **Abstract**

The current invention relates to a sensor device predisposed for installation in an electrical user.

The sensor device (9) is suitable to detect both the presence and/or the level of a liquid in a containment compartment of the electrical user and the temperature of the liquid in the containment compartment. The sensor device (9) comprises at least a first sensitive element (7) capable of generating an output signal variable in relation to the presence or to the absence of liquid in the containment compartment and/or variable in relation to the level of liquid in the containment compartment. The sensor device (9) further comprises a temperature probe (8) capable of generating an output signal variable in relation to the temperature of liquid in the containment compartment and a support (10) on which the first sensitive element (7) and the temperature probe (8) are arranged. The sensor device (9) is configured to be applied outside a wall of the containment compartment.

Additionally or alternatively, the sensor device is suitable to detect the presence and/or the level of a liquid in a containment compartment of the electrical user. The sensor device comprises a first sensitive element (7) of the capacitive type, a second sensitive element (77) of the capacitive type and an electronic control unit, operationally connected to the first sensitive element (7) and to the second sensitive element (77). The electronic control unit is configured to determine the presence or the absence of liquid in the containment compartment and/or the possible reaching of a predetermined level by the liquid in the containment compartment, on the basis of the difference between a first parameter (p) and a second parameter (s). The first parameter (p) is representative of the electrical capacitance of the first sensitive element (7), whilst the second parameter (s) is representative of the electrical capacitance of the second sensitive element (77).

## Description

The subject of this invention is a sensor that is made to be installed in an electrical appliance and can detect both the presence and/or the level of a liquid in a compartment of that electrical appliance, and the temperature of said liquid in that compartment of that electrical appliance. This invention also includes a method for installing in an electrical appliance a sensor that can detect both the presence and/or the level of a liquid in a compartment of that electrical appliance, and the temperature of said liquid in that compartment of that electrical appliance. This invention also includes a sensor that is made to be installed in an electrical appliance and can detect the presence and/or level of a liquid in a compartment of that electrical appliance, and a method for detecting the presence and/or level of a liquid, which method can be implemented through that sensor. Finally, the subject of this invention is a method for coding information that regards a compartment of an electrical appliance, with this coding method accomplished through a digital signal and capable of being associated with that detection method.

Electrical appliances that need circulation of a liquid (for example water) for their operation are generally equipped with a compartment that can collect the liquid that accumulates in that space, which is then recirculated through a special hydraulic circuit. In the specific case of a dishwasher, this compartment includes the bottom of the wash tank, which is typically associated with a component (in technical jargon known as a "trap") that acts as a space for collecting and containing water or the wash liquid.

In addition, execution of the wash and/or rinse cycles of a dishwasher requires the wash liquid that circulates in the hydraulic circuit to be heated (for example, heating may be through an electrical heating element, which can be integrated into the trap or the circulation pump or can be tubular and installed in the hydraulic circuit).

Dishwashers include sensors that can detect the presence and/or level of liquid (water or wash liquid) in the trap, and the temperature of the liquid (water or wash liquid) in the trap. The dishwasher's electronic control system uses the information from said sensors to appropriately activate/deactivate the dishwasher actuators (electrovalves, circulation pump, discharge pump, electrical heating element, and so forth). Additionally, again based on information from the level and temperature sensors, the dishwasher's electronic control system can detect any anomalies and/or malfunctions of the dishwasher (for example a possible block of the circulation pump or potential malfunction of the electrical heating element due to calcium deposits).

Dishwashers available on the market typically have separate level and temperature sensors that provide their respective information while immersed in the wash liquid, due to their position within the wash tank or within the trap.

A circulation pump is typically installed downstream from the trap, and by withdrawing water or wash liquid from the trap, it supplies the sprayers (or equivalent delivery mechanisms) placed in the wash tank. Once delivered to the wash tank, the water or wash liquid return to the trap by means of gravity, and then are recirculated by means of the circulation pump. During their movement, the water or wash liquid can be filtered (by holding any contaminants on the floor of the tank and/or in the trap) and/or heated (for example, heating can be through an electrical heating element that can be integrated into the trap or the circulation pump, or can be tubular and installed in the hydraulic circuit). A dishwasher typically also includes one or more electrovalves to load water into the wash tank (and thus into the trap) from the water supply system and a discharge pump (located downstream from the trap and parallel to the circulation pump) which allows the water or wash liquid to be drained out of the dishwasher, once the desired treatment is performed.

For proper functioning of the dishwasher, the presence and/or level of liquid (water or wash liquid) must be detected in the trap. Based on information regarding the presence and/or level of liquid in the trap, the dishwasher's electronic control system appropriately activates/deactivates the dishwasher actuators (electrovalves, circulation pump, discharge pump and so forth). Additionally, again based on information regarding the presence and/or level of liquid in the trap, the dishwasher's electronic control system can detect any anomalies and/or malfunctions in the dishwasher (for example a possible block of the circulation pump). To control and/or monitor the dishwasher, information regarding the presence and/or level of liquid in the trap can be appropriately combined with information on the temperature of the liquid in the trap and/or information on the cloudiness of the liquid in the trap.

To detect the presence and/or level of liquid, one or more level sensors are immersed in the dishwasher trap. Of the technologies currently available, the technology becoming most popular for detecting the presence and/or level of liquid is capacitive technology. Capacitive technology is distinguished by the ease of processing the signal and interfacing with the dishwasher's electronic control system, the simplicity of the necessary components and the installation of the sensors, and the very reasonable cost.

The document US2009/0039105A1 describes a method for controlling the withdrawal of liquids from a container that includes the phase of detecting variation in a characteristic of the liquid when it comes into contact with a sensor mounted in the container.

The document US2009/0153150A1 describes a device that locally measures an electrical property of the contents of a container, which device includes at least three electrodes placed adjacent to each other along its height and electrically isolated from each other.

The document US2017/0261361A1 describes a level sensor to detect the level of a liquid in a vehicle fuel tank, with the level sensor having a series of capacitive elements that includes electrodes spaced out along the liquid level detection axis.

The Applicant has noted that known technical solutions have some problems, in particular related to the complexity of installing level sensors and temperature sensors in dishwashers. If the sensors experience breaking loads, maintenance and/or replacement of the level sensor or the temperature sensor (necessary to restore proper functioning of the dishwasher) become quite difficult.

Moreover, the Applicant has noted that capacitive technology has some problems, in particular related to how reliably it can detect the presence and/or level of liquid. In laboratory tests performed by the Applicant, capacitive technology has shown too much susceptibility to certain interfering inputs (in particular in temperature). The Applicant has in fact verified that capacitive-type sensors erroneously detected temperature variations as level variations.

This invention therefore has the purpose of overcoming the aforementioned problems and thus ensuring that level and temperature sensors can guarantee maximum ease of installation and any maintenance or replacement.

This invention also has the purpose of configuring level and temperature sensors in order to guarantee maximum resistance to wear and tear and corrosion.

This invention also has the purpose of reducing the production cost of level and temperature sensors, and consequently of the electrical appliances (in particular dishwashers) in which said sensors are installed.

This invention also has the purpose of making level and temperature sensors available that are distinguished by optimal precision and accuracy.

This invention also has the purpose of overcoming the aforementioned problems in relation to capacitive technology and to thus make the sensors, once installed in an electrical appliance (for example a dishwasher) for purposes of detecting the presence and/or level of a liquid in a compartment (for example the trap), as immune as possible to interfering inputs, in particular the interfering input of temperature.

This invention also has the purpose of making capacitive-type sensors multifunctional, that is capable of not only detecting the presence and/or level of liquid, but also capable of at least one additional detection, and also able to adequately code these detections, so they can be unequivocally interpreted by the control systems with which these sensors interface.

This invention also has the purpose of configuring the sensors in order to guarantee easy installation and maintenance if required, resistance to wear and tear, and reasonable production costs.

These and additional purposes are resolved by the invention in any of the claims attached to this description and/or in any of the following aspects.

A first independent aspect of the subject of this invention regards a sensor made to be installed in an electrical appliance, such as a dishwasher, and suitable for identifying the presence and/or level of a liquid in a compartment of said electrical appliance and the temperature of said liquid in said compartment of said electrical appliance, with said sensor including:
- at least a first sensing element capable of generating an output signal that varies based on the presence or absence of said liquid in said compartment and/or that varies based on the level of said liquid in said compartment;
- a temperature probe capable of generating an output signal that varies based on the temperature of said liquid in said compartment and
- a support on which said first sensing element and said temperature probe are placed.

Characteristically, according to the first aspect, said sensor is configured to be applied on the outside of a wall of said compartment, in particular on the outside of a lateral wall of said compartment.

A second aspect of this invention, which depends on the first aspect, regards a sensor made to be installed in an electrical appliance, where said first sensing element is of the capacitive type and is placed on said support in a position where, once said sensor is installed in said electrical appliance, the electrical capacity of said first sensing element is sensitive to variations in the presence and/or level of said liquid in said compartment.

A third aspect of this invention, which depends on the second aspect, regards a sensor made to be installed in an electrical appliance, where said first sensing element is placed on the face of said support which, once said sensor is installed in said electrical appliance, is adjacent to said wall of said compartment, with the face of said support on which said first sensing element is placed preferably being a substantially flat surface.

A fourth aspect of this invention, which depends on any of the previous aspects, regards a sensor made to be installed in an electrical appliance, where said temperature probe is an NTC type and is placed on said support in a position so that, once said sensor is installed in said electrical appliance, the electrical heating element of said temperature probe is sensitive to variations in the temperature of said liquid in said compartment.

A fifth aspect of this invention, which depends on any of the previous aspects, regards a sensor made to be installed in an electrical appliance, where the distance between said first sensing element and said temperature probe is between 20 and 30 mm.

A sixth aspect of this invention, which depends on any of the previous aspects, regards a sensor made to be installed in an electrical appliance, also including a second sensing element of the capacitive type, with said second sensing element placed on said support in a position so that, once said sensor is installed in said electrical appliance, the electrical capacity of said second sensing element is not sensitive to variations in the presence and/or level of said liquid in said compartment.

A seventh aspect of this invention, which depends on the sixth aspect, regards a sensor made to be installed in an electrical appliance, where said second sensing element is placed on the face of said support opposite the face of said support on which said first sensing element is placed.

An eighth aspect of this invention, which depends on any of the previous aspects, regards a sensor made to be installed in an electrical appliance, where said support is made of insulating material.

A ninth aspect of this invention, which depends on the eighth aspect, regards a sensor made to be installed in an electrical appliance, where a thermal bridge is created in a portion of said support, in particular in the form of metallized holes, said thermal bridge being preferably adjacent to said temperature probe.

A tenth aspect of this invention, which depends on the eighth aspect or ninth aspect, regards a sensor made to be installed in an electrical appliance, where at least a portion of said support is made of flexible material, said second sensing element being preferably placed on the portion of said support in flexible material.

An eleventh aspect of this invention, which depends on the tenth aspect, regards a sensor made to be installed in an electrical appliance where, once said sensor is installed in said electrical appliance, the portion in flexible material of said support forms the lower portion of said support, being preferably placed lower than the bottom wall of said compartment.

A twelfth aspect of this invention, which depends on any of the previous aspects, regards a sensor that is made to be installed in an electrical appliance and also includes an electronic control unit, in particular a microcontroller, with said electronic control unit being operatively connected to said first sensing element and/or said second sensing element and/or to said temperature probe, with said sensor optionally including a programming and debugging socket operatively connected to said electronic control unit.

A thirteenth aspect of this invention, which depends on any of the previous aspects, regards a sensor that is made to be installed in an electrical appliance and also includes methods for interfacing with a control system of said electrical appliance, in particular a connector, preferably an edge connector and/or a radio frequency communication node, with said interfacing methods being operatively connected to said first sensing element and/or to said second sensing element and/or to said temperature probe and/or to said electronic control unit.

A fourteenth aspect of this invention, which depends on any of the previous aspects, regards a sensor that is made to be installed in an electrical appliance and also includes means for affixing said sensor to said wall of said compartment, said means for affixing preferably including at least one protrusion and/or at least one recess and/or at least one hole in said support.

A fifteenth aspect of this invention is an electrical appliance which includes:
- a compartment and
- a sensor according to any of the preceding aspects, said sensor being capable of detecting both the presence and/or level of liquid in said compartment and the temperature of said liquid in said compartment, and applied on the outside of a wall of said compartment, in particular on the outside of a lateral wall of said compartment.

A sixteenth aspect of this invention, which depends on the fifteenth aspect, regards an electrical appliance, where said first sensing element is positioned adjacent to said wall of said compartment and/or where said second sensing element is not positioned adjacent to said wall of said compartment.

A seventeenth aspect of this invention, which depends on the fifteenth aspect or the sixteenth aspect, regards an electrical appliance where said second sensing element is located lower than said compartment.

An eighteenth aspect of this invention, which depends on any of the aspects from the fifteenth aspect to the seventeenth aspect, regards an electrical appliance where said temperature probe is located lower than said first sensing element.

A nineteenth aspect of this invention, which depends on the eighteenth aspect, regards an electrical appliance where the height difference between said first sensing element and said temperature probe is comparable to the height difference between said temperature probe and a bottom wall of said compartment.

A twentieth aspect of this invention, which depends on any of the aspects from the fifteenth aspect to the nineteenth aspect, regards an electrical appliance where said sensor is glued to said wall of said compartment, preferably using double-sided tape.

A twenty-first aspect of this invention, which depends on the twentieth aspect, regards an electrical appliance where the material used to glue said sensor to said wall of said compartment is thermally conductive, the thermal conductivity of said material used to glue said sensor to said wall of said compartment being preferably greater than 1 W/(m·K).

A twenty-second aspect of this invention, which depends on any of the aspects from the fifteenth aspect to the twenty-first aspect, regards an electrical appliance where said sensor is fitted into and/or screwed to said wall of said compartment.

A twenty-third aspect of this invention, which depends on any of the aspects from the fifteenth aspect to the twenty-first aspect, regards an electrical appliance where said electrical appliance is a dishwasher that includes a wash and/or rinse tank.

A twenty-fourth aspect of this invention, which depends on the twenty-third aspect, regards an electrical appliance where said compartment is a collection trap located on the bottom of said tank.

A twenty-fifth independent aspect of this invention is a method for installing a sensor in an electrical appliance such as a dishwasher, that can detect both the presence and/or the level of a liquid in a compartment of said electrical appliance or the temperature of said liquid in said compartment of said electrical appliance, including the phase of applying said sensor to the outside of a wall of said compartment, in particular a lateral wall of said compartment.

A twenty-sixth aspect of this invention, which depends on the twenty-fifth aspect, regards a method of installing a sensor to an electrical appliance, which sensor can detect both the presence and/or level of liquid in a compartment of said electrical appliance, where said application phase includes a sub-phase of gluing said sensor to said wall of said compartment, preferably using double-sided tape, and where, optionally, the material used to glue the sensor to said wall of said compartment is thermally conductive, with the thermal conductivity of the material used to glue said sensor to said wall of said compartment being preferably greater than 1 W/(m·K).

A twenty-seventh aspect of this invention, which depends on the twenty-fifth aspect or the twenty-sixth aspect, regards a method for installing a sensor in an electrical appliance, which sensor can detect the presence and/or level of a liquid in a compartment of said electrical appliance, where said application phase includes a sub-phase of fitting and/or screwing said sensor to said wall of said compartment.

A twenty-eighth aspect of this invention, which depends on any of the aspects from the twenty-fifth aspect to the twenty-eighth aspect, regards a method of installing a sensor in an electrical appliance, which sensor can detect both the presence and/or the level of liquid in a compartment of said electrical appliance, with said sensor including at least one sensing element, in particular a capacitive type, capable of generating an output signal that varies based on the presence or absence of said liquid in said compartment and/or that varies based on the level of said liquid in said compartment, where said application phase includes a sub-phase of placing said sensor so that said sensing element is positioned adjacent to said wall of said compartment.

A twenty-ninth independent aspect of this invention regards a sensor made to be installed in an electrical appliance, for example a dishwasher, which sensor is suitable for detecting the presence and/or level of a liquid in a compartment of said electrical appliance, with said sensor including a first capacitive-type sensing element, a second capacitive-type sensing element, and an electronic control unit, in particular a microcontroller, operatively connected to said first sensing element and said second sensing element. Characteristically, according to the twenty-ninth aspect, said electronic control unit is configured to determine the presence or absence of liquid in said compartment and/or when the liquid reaches a predetermined level in said compartment, based on the difference between a first parameter and a second parameter, said first parameter representing the electrical capacity of said first sensing element and said second parameter representing the electrical capacity of said second sensing element.

A thirtieth aspect of this invention, which depends on the twenty-ninth aspect, regards a sensor, where said electronic control unit is configured to receive a predefined number of output signals from said first sensing element and from said second sensing element and to respectively calculate said first parameter and said second parameter as the average value of the output signals received from said first sensing element and the average value of the output signals received from said second sensing element.

A thirty-first aspect of this invention, which depends on the twenty-ninth aspect or the thirtieth aspect, regards a sensor where said electronic control unit is configured to determine the presence or absence of liquid in said compartment and/or whether said liquid reaches a predetermined level in said compartment, by comparing said difference between said first parameter and said second parameter with a first predefined value.

A thirty-second aspect of this invention, which depends the thirty-first aspect, regards a sensor which is additionally able to detect any deposits on said compartment and/or any contaminants in said compartment, in which said electronic control unit is configured to determine the presence or absence of liquid in said compartment and/or whether said liquid reaches a predetermined level in said compartment in combination with the occurrence of deposits on said compartment and/or contaminants in said compartment, by comparing said difference between said first parameter and said second parameter with a second predefined value, said second predefined value preferably being less than said first predefined value.

A thirty-third aspect of this invention, which depends on any of the aspects from the twenty-ninth aspect to the thirty-second aspect, regards a sensor in which said electronic control unit is configured to determine the switch from an absence of liquid in said compartment to the presence of liquid in said compartment and/or the switch from a level of said liquid in said compartment less than said predetermined level to a level of said liquid in said compartment equal to or greater than said predetermined level by comparing said difference between said first parameter and said second parameter with a third predefined value, and in which said electronic control unit is configured to determine the switch from the presence of liquid in said compartment to the absence of liquid in said compartment and/or the switch from a level of said liquid in said compartment equal to or greater than said predetermined level to a level of said liquid in said compartment lower than said predetermined level by comparing said difference between said first parameter and said second parameter with a fourth predefined value, with said third predefined value being preferably greater than said fourth predefined value.

A thirty-fourth aspect of this invention, which depends on the thirty-third aspect, regards a sensor which is additionally able to detect any deposits on said compartment and/or any contaminants in said compartment, where said electronic control unit is configured to determine the switch from the absence of liquid in said compartment to the presence of liquid in said compartment in combination with the occurrence of deposits on said compartment and/or contaminants in said compartment and/or the switch from a level of said liquid in said compartment less than said predetermined level to a level of said liquid in said compartment equal to or greater than said predetermined level in combination with the occurrence of deposits on said compartment and/or contaminants in said compartment, by comparing said difference between said first parameter and said second parameter with a fifth predefined value, and where said electronic control unit is configured to determine the switch from the presence of liquid in said compartment to the absence of liquid in said compartment in combination with the occurrence of deposits on said compartment and/or contaminants in said compartment and/or the switch from a level of said liquid in said compartment equal to or greater than said predetermined level to a level of said liquid in said compartment less than said predetermined level in combination with the occurrence of deposits on said compartment and/or contaminants in said compartment, by comparing said difference between said first parameter and said second parameter with a sixth predefined value, with the fifth predefined value being preferably greater than said sixth predefined value, and said fifth predefined value being preferably less than said third predefined value, with said sixth predefined value being preferably less than said fourth predefined value.

A thirty-fifth aspect of this invention, which depends on any of the aspects from the twenty-ninth aspect to the thirty-fourth aspect, with the sensor additionally being able to detect the absence or presence of any leaks within said electrical appliance, in particular from said compartment, where said electronic control unit is configured to determine the absence or presence of any leaks inside said electrical appliance, in particular from said compartment, based on the second parameter.

A thirty-sixth aspect of this invention, which depends on the thirty-fifth aspect, regards a sensor, where said electronic control unit is configured to determine the absence or presence of any leaks inside said electrical appliance, in particular from said compartment, by comparing said second parameter with a predefined threshold value.

A thirty-seventh aspect of this invention, which depends on any of the aspects from the twenty-ninth aspect to the thirty-sixth aspect, regards a sensor, where said control unit is configured to generate at least one digital-type output signal, with the logical level of said output signal, if liquid is present in said compartment and/or reaches said predetermined level in said compartment, differing from the logical level of said output signal if liquid is absent from said compartment and/or does not reach said predetermined level in said compartment, with the logical level of said output signal, if liquid is present in said compartment and/or reaches said predetermined level in said compartment, preferably being high, and with the logical level of said output signal, if there is no liquid in said compartment and/or it does not reach said predetermined level in said compartment, preferably being low.

A thirty-eighth aspect of this invention, which depends on the thirty-seventh aspect, regards a sensor, where said control unit is configured to generate said output signal as a continuous signal when the absence of deposits on said compartment and/or contaminants in said compartment has been detected or the absence of leaks within said electrical appliance has been detected, in particular from said compartment, and is configured to generate a periodic output signal when deposits on said compartment and/or contaminants in said compartment have been detected and/or when leaks have been detected in said electrical appliance, in particular from said compartment, with the frequency of said output signal, when deposits on said compartment and/or contaminants in said compartment have been detected, preferably differing from the frequency of said output signal when leaks have been detected in said electrical appliance, in particular from said compartment.

A thirty-ninth aspect of this invention, which depends on any of the aspects from the twenty-ninth aspect to the thirty-eighth aspect, regards a sensor that additionally includes a support, in particular made of insulating material, where said sensing element is placed on said support in a position so that, once said sensor is installed in said electrical appliance, the electrical capacity of said first sensing element is sensitive to variations in the presence and/or level of said liquid in said compartment and where said second sensing element is placed on said support in a position so that, once said sensor is installed in said electrical appliance, the electrical capacity of said second sensing element is not sensitive to variations in the presence and/or level of said liquid in said compartment, with said support preferably associated with shielding methods that can make the electrical capacity of said first sensing element insensitive to variations in the presence and/or level of said liquid in said compartment until said predetermined level is reached.

A fortieth aspect of this invention, which depends on the thirty-ninth aspect, regards a sensor where said second sensing element is placed on said support in a position so that, once said sensor is installed in said electrical appliance, said second sensing element is located below said compartment.

A forty-first aspect of this invention, which depends on the fortieth aspect, regards a sensor where at least the portion of said support on which said second sensing element is placed is flexible.

A forty-second aspect of this invention, which depends on any of the aspects from the twenty-ninth aspect to the forty-first aspect, regards a sensor that is also able to detect the temperature of said liquid in said compartment, said sensor also including a third sensing element capable of generating an output signal that varies based on temperature, with said third sensing element preferably including an NTC-type temperature probe.

A forty-third aspect of this invention, which depends on the forty-second aspect, regards a sensor where said first sensing element and said third sensing element are placed on said support in positions so that, once said sensor is installed in said electrical appliance, said third sensing element is located below said first sensing element.

A forty-fourth aspect of this invention, which depends on the forty-third aspect, regards a sensor where said first sensing element and said third sensing element are placed on said support in positions where, once said sensor is installed in said electrical appliance, the height difference between said first sensing element and said third sensing element is comparable to the height difference between said third sensing element and a bottom wall of said compartment.

A forty-fifth aspect of this invention, which depends on any of the aspects from the twenty-ninth aspect to the forty-fourth aspect, regards a sensor which is configured to be applied to the outside of a wall of said compartment, in particular to the outside of a lateral wall of said compartment.

A forty-sixth aspect of this invention, which depends on any of the aspects from the twenty-ninth aspect to the forty-fifth aspect, regards a sensor that additionally includes a casing, with said casing being configured to be inserted within said compartment through an opening created in a wall of said compartment and is preferably made of a material resistant to water and/or corrosion, such as calcium-filled polypropylene or talc-filled polypropylene, in particular in a bottom wall of said compartment, where said first sensing element is placed within said casing and where said second sensing element is placed on the outside of said casing and where a resin made of electrically insulating material, for example an epoxy resin or a polyurethane resin, is optionally placed between said first sensing element and said casing.

A forty-seventh independent aspect of this invention regards a method of detecting the presence and/or level of liquid in a compartment of an electrical appliance, for example a dishwasher, that includes the following phases:
i) a first parameter is received from a first sensing element, said first sensing element being in particular a capacitive type;
ii) a second parameter is received from the second sensing element, said second sensing element being in particular a capacitive type;
iii) the difference between said first parameter and said second parameter is calculated and
iv) information is obtained on the presence or absence of liquid in said compartment and/or whether said liquid has reached a predetermined level in said compartment based on said difference between said first parameter and said second parameter.

A forty-eighth aspect of this invention, which depends on the forty-seventh aspect, regards a method of detecting the presence and/or level of a liquid in a compartment of an electrical appliance, where said phases i) and ii) are repeated a predefined number of times and where the difference calculated in said phase iii) is the difference between the average of the values received for said first parameter and the average of the values received for said second parameter.

A forty-ninth aspect of this invention, which depends on the forty-seventh aspect or the forty-eighth aspect, regards a method for detecting the presence and/or level of liquid in a compartment of an electrical appliance, where in said phase iv) information regarding the presence or absence of liquid in said compartment and/or whether said liquid has reached a predetermined level in said compartment is obtained by comparing said difference between said first parameter and said second parameter with a first predefined value.

A fiftieth aspect of this invention, which depends on any of the aspects between the forty-seventh aspect and the forty-ninth aspect, regards a method for detecting the presence and/or level of liquid in a compartment of an electrical appliance, also including the following phase:
v) information is obtained on the occurrence of deposits on said compartment and/or contaminants in said compartment based on said difference between said first parameter and said second parameter.

A fifty-first aspect of this invention, which depends on the fiftieth aspect, regards a method for detecting the presence and/or level of liquid in a compartment of an electrical appliance, where in said phase v) information on the presence or absence of liquid in said compartment and/or whether the liquid reaches a predetermined level in said compartment in combination with the occurrence of deposits on said compartment and/or contaminants in said compartment is obtained by comparing said difference between said first parameter and said second parameter with a second predefined value.

A fifty-second aspect of this invention, which depends on the fifty-first aspect, regards a method for detecting the presence and/or level of liquid in a compartment of an electrical appliance, where said second predefined value is less than said first predefined value.

A fifty-third aspect of this invention, which depends on any of the aspects from the forty-seventh to the fifty-second aspect, regards a method for detecting the presence and/or level of liquid in a compartment of an electrical appliance, where corrective factors are applied to said first parameter and/or to said second parameter and/or to said difference between said first parameter and said second parameter.

A fifty-fourth aspect of this invention, which depends on any of the aspects from the forty-seventh to the fifty-third aspect, regards a method for detecting the presence and/or level of liquid in a compartment of an electrical appliance, and also includes the following phase:
vi) information is obtained on the occurrence of leaks in said electrical appliance, in particular from said compartment, based on said second parameter.

A fifty-fifth aspect of this invention, which depends on the fifty-fourth aspect, regards a method for detecting the presence and/or level of liquid in a compartment of an electrical appliance, where in said phase vi) information is obtained regarding the absence or occurrence of leaks within said electrical appliance, in particular from said compartment, by comparing said second parameter with a predefined threshold value.

A fifty-sixth independent aspect of this invention regards a method, by means of a digital signal, of coding information regarding a compartment of an electrical appliance, for example a dishwasher, and includes the following phases:
A) the logical level of said digital signal is set so that a first set of information can be coded and
B) said digital signal is generated as a continuous signal or a periodic signal so that at least a second set of information can be coded.

A fifty-seventh aspect of this invention, which depends on the fifty-sixth aspect, regards a method, by means of a digital signal, of coding information regarding a compartment of an electrical appliance, where said first set of information regards the presence or absence of liquid in said compartment and/or whether a predetermined fill level has been reached in said compartment, and where said second set of information regards the presence or absence of deposits on said compartment and/or contaminants in said compartment and/or regards the presence or absence of leaks within said electrical appliance, in particular from said compartment.

A fifty-eighth aspect of this invention, which depends on the fifty-sixth aspect or the fifty-seventh aspect, regards a method, by means of a digital signal, of coding information regarding a compartment of an electrical appliance, where at least a third item of information is additionally coded by means of said digital signal, with a first frequency of the periodic signal generated during that phase B) being uniquely associated with said second item of information, and a second frequency of the periodic signal generated during that phase B) being uniquely associated with said third item of information, with said first frequency and said second frequency being appreciably distinct from each other.

With regard to the aspects of this invention listed above, it should be noted that the twenty-ninth to the fifty-eighth aspect are independent from the first to the twenty-eighth aspect; nevertheless, each aspect from the twenty-ninth to the fifty-eighth aspect can be adequately combined with any of the aspects from the first to the twenty-eighth aspect.

The above aspects will become clearer following this detailed description and the figures accompanying this description, where:
- FIG.1A and FIG.1B are views of the two opposite faces of a sensor according to a first embodiment of this invention;
- FIG.2 is an axonometric representation of the sensor in FIG.1A and FIG.1B installed on a dishwasher trap;
- FIG.3 is an exploded view of the installation of the sensor in FIG.1A and FIG.1 B on a dishwasher trap;
- FIG.4 is a view of a sensor according to a second embodiment of this invention;
- FIG.5 is a cross section view representing the sensor in FIG.4 installed in a dishwasher trap;
- FIG.6 is an exploded view representing the installation of the sensor in FIG.4 in a dishwasher trap;
- FIG.7 is a representation of the wiring diagram of a sensor according to this invention;
- FIG.8A, FIG.8B and FIG.8C are flow diagrams that represent a possible implementation of the detection method according to this invention and
- FIG.9A, FIG.9B and FIG.9C are representations of possible implementations of the coding method according to this invention.

The subject of this invention is a sensor 9, 9* made to be installed in an electrical appliance and which can detect the presence and/or level of liquid in a compartment of that electrical appliance. The sensor 9, 9* is optimal for installation in a dishwasher, to detect the presence and/or level of liquid in the trap 1 and/or on the bottom of the wash tank. Nevertheless, the sensor 9, 9* according to this invention can also be optimally installed in other electrical appliances, for example a coffeemaker in order to detect the presence and/or level of water in the reservoir and/or in the boiler, or in a clothes dryer to detect the presence and/or level of water in the condensation tray and/or condensate collection reservoir, or on a steam heating element of a coffeemaker in order to detect the presence and/or level of water in the water reservoir and/or boiler, or on a water heater to detect the presence and/or level of water in the reservoir. The sensor 9, 9* can also be optimally installed on non-household electrical appliances (for example industrial systems) where the presence and/or level of liquid in tanks or similar equipment must be monitored. In addition, the sensor 9, 9* can be conveniently installed in vehicles, for example to monitor the presence and/or level of fuel in an automobile gas tank.

The sensor 9, 9* according to this invention is an electronic control type and is configured to interface with the electronic control system of the electrical appliance where the sensor 9, 9* is installed. In particular, the sensor 9, 9* includes an electronic control unit that can communicate with the electronic control system of the electrical appliance where the sensor 9, 9* is installed, through a digital line of communication. The electronic control unit of the sensor 9, 9* is advantageously a microcontroller 3. The sensor 9, 9* advantageously includes a socket 45 that makes it possible to program and/or debug the electronic control unit, in particular of the microcontroller 3.

The sensor 9, 9* according to this invention uses capacitive technology to detect the presence and/or level of liquid in the compartment (for example in the trap 1) and includes a first sensing element 7 and a second sensing element 77, with both sensing elements 7, 77 being the capacitive type.

The sensor 9, 9* also includes a support 10, 10*, which in particular is made of insulating material for the support of the microcontroller 3 and sensing elements 7, 77. Advantageously, sensor 9, 9* also uses printed circuit technology: in this case, the microcontroller 3, the sensing elements 7, 77, the additional components of the sensor 9, 9* and the electrical connections are supported by and/or made on a PCB, which therefore acts as a support 10, 10*. In a form of implementation of this invention, the PCB can be multilayer, that is include multiple conducting layers.

Characteristically, the electronic control unit of the sensor 9, 9* is configured to determine the presence or absence of liquid in the compartment (for example in the trap 1) and/or whether the liquid has reached a predetermined level in the compartment (for example in the trap 1), based on the difference between a first parameter p and a second parameter s, with the first parameter p representing the electrical capacity of the first sensing element 7 and the second parameter s representing the electrical capacity of the second sensing element 77.

The first sensing element 7 and the second sensing element 77 may conveniently be called the "water sensor" and the "air sensor." In fact, the first sensing element 7 is located on the support 10, 10* in a position so that the electrical capacity of the first sensing element 7 varies appreciably depending on whether liquid is present or absent in the compartment (for example in the trap 1) and/or varies appreciably depending on the change in the level of liquid in the compartment (for example in the trap 1). On the contrary, the second sensing element 77 is located on the support 10, 10* in a position where the electrical capacity of the second sensing element 77 remains substantially unchanged whether liquid is present or absent in the compartment (for example in the trap 1) and/or remains substantially unchanged when the level of liquid changes in the compartment (for example in the trap 1). The sensing elements 7, 77 are placed on the support 10, 10* in positions so that any interfering inputs (for example a change in temperature) substantially affect the respective electrical capacities to the same degree.

Advantageously, shielding methods are associated with the support 10, 10*. The function of these shielding methods is to further insulate the second sensing element 77 from the compartment (for example from the trap 1), thus ensuring that the presence and/or absence and/or level of liquid in the compartment (for example in the trap 1) has no effect on the electrical capacity of the second sensing element 77. Alternatively and/or additionally, the shielding methods associated with the support 10, 10* have the function, especially when the sensor 9, 9* is used as a level sensor, to make the electrical capacity of the first sensing element 7 substantially insensitive to variations in the level of liquid in the compartment (for example in the trap 1) until it reaches a predetermined level: in this way, when the liquid reaches the predetermined level in the compartment (for example in the trap 1) it is perceived through a sharp (and thus easily recognizable) variation in the electrical capacity of the first sensing element 7.

As the presence or absence of liquid in the compartment (for example in the trap 1) and/or liquid reaching any predetermined level in the compartment (for example in the trap 1) determined based on the difference between a first parameter p representing the electrical capacity of the first sensing element 7 and a second parameter s representing the electrical capacity of the second sensing element 77 (rather than being determined, according to the teachings of prior art, based on only the first parameter p representing the electrical capacity of the first sensing element 7), it follows that the sensor 9, 9* according to this invention makes it possible to determine the presence or absence of liquid in the compartment and/or whether the liquid has reached any predetermined level in the compartment, in a way that is practically immune to interfering inputs (in particular temperature), which the Applicant has found to appreciably affect detections by the capacitive sensors and thus significantly jeopardize the reliability of said capacitive sensors.

Again in order to make the findings of the sensor 9, 9* as reliable as possible, the electronic control unit is configured to determine the first parameter p, representing the electrical capacity of the first sensing element 7, and the second parameter s, representing the electrical capacity of the second sensing element 77, after receiving a number of output signals from the first sensing element 7 and the second sensing element 77 that statistically result in significantly reducing the effect of any disturbances (for example electrical or electromagnetic disturbances) that could alter individual receptions. For example, the electronic control unit can be programmed to receive a predetermined number of output signals from the first sensing element 7 (representing the electrical capacity of the first sensing element 7), and output signals from the second sensing element 77 (representing the electrical capacity of the second sensing element 77) and to determine both the first parameter p and the second parameter s as average values of the values received. The speed of calculation of the electronic control unit, in particular of the microcontroller 3, is in any event such that a statistically significant number of receptions (one hundred or more) are made within microseconds or milliseconds, that is within a negligible time, so that the quantity of liquid in the compartment (for example in the trap 1) can certainly be considered constant.

Advantageously, the electronic control unit of the sensor 9, 9* is configured to determine the presence or absence of liquid in the compartment (for example in the trap 1) and/or when a predetermined level of liquid is reached in the compartment (for example in the trap 1), comparing the difference between the first parameter p and the second parameter s with one or more predefined values.

According to a form of implementation of the invention, the difference between the first parameter p and the second parameter s is compared with a single predefined value: when the difference between the first parameter p and the second parameter s is less than that predefined value, liquid is considered to be absent from the compartment or the predetermined level of liquid is considered not reached; when instead the difference between the first parameter p and the second parameter s is greater than that predefined value, liquid is considered present in the compartment or the predetermined level of liquid is considered reached.

In order to avoid instability of the output signal from the sensor 9, 9* when the difference between the first parameter p and the second parameter s is very close to said predefined value (and is also likely to fluctuate around said predefined value), a hysteresis band may advantageously be included for said predefined value, so that the difference between the first parameter p and the second parameter s is compared with the higher hysteresis value to detect a switch from the absence of liquid in the compartment (for example in the trap 1) to the presence of liquid in the compartment (for example in the trap 1) and/or a switch from a level of liquid in the compartment (for example in the trap 1) lower than the predetermined level to a level of liquid in the compartment (for example in the trap 1) equal to or greater than the predetermined level, while the difference between the first parameter p and the second parameter s is compared with the lower hysteresis value to detect a switch from the presence of liquid in the compartment (for example in the trap 1) to the absence of liquid in the compartment (for example in the trap 1) and/or a switch from a level of liquid in the compartment (for example in the trap 1) equal to or greater than the predetermined level to a level of liquid in the compartment (for example in the trap 1) less than the predetermined level.

According to a form of implementation of the invention, the difference between the first parameter p and the second parameter s is initially compared with a predefined higher value. When the difference between the first parameter p and the second parameter s is greater than that predefined higher value, liquid is considered to be present in the compartment or the predetermined level of liquid is considered reached. If the difference between the first parameter p and the second parameter s is less than that predefined higher value, the difference between the first parameter p and the second parameter s is thus compared with a predefined lower value. If the difference between the first parameter p and the second parameter s is also less than that predefined lower value, liquid is considered to be absent from the compartment or the predetermined level of liquid is considered not reached. If the difference between the first parameter p and the second parameter s is greater than that predefined lower value, liquid is considered to be present in the compartment or the predetermined level of liquid is considered to be reached and the sensor 9, 9* receives additional information on the compartment (for example on the trap 1), this additional information being in particular that deposits are present on the compartment (for example grease has covered the inside wall of the trap 1) and/or there are contaminants in the compartment (for example the liquid has carried large food particles into the trap 1). Hysteresis bands may be appropriately provided both around the predefined higher value, and around the predefined lower value.

According to a form of implementation of the invention, the second parameter is compared with a predefined threshold value, in order to obtain additional information on the electrical appliance (for example the dishwasher) and/or on the compartment (for example the trap 1). When the second parameter s is greater than the predefined greater threshold value, it may be deduced that the second sensing element 77 came into contact with the liquid due to a leak in the electrical appliance (for example in the dishwasher), in particular from the compartment (for example from the trap 1).

The control unit, in particular the microcontroller 3, of the sensor 9, 9* is configured to generate at least one digital-type output signal. The logical level of that output signal is high if there is liquid in the compartment (for example in the trap 1) and/or the liquid reaches a predetermined level in the compartment (for example in the trap 1), while it is low if liquid is absent from the compartment (for example in the trap 1) and/or does not reach the predetermined level in the compartment (for example in the trap 1). Alternatively, the logical level of that output signal is low if there is liquid in the compartment (for example in the trap 1) and/or liquid reaches a predetermined level in the compartment (for example in the trap 1), while it is high if liquid is absent from the compartment (for example in the trap 1) and/or does not reach the predetermined level in the compartment (for example in the trap 1).

According to a form of implementation of the invention, the digital signal generated by the control unit, in particular by the microcontroller 3, is used to code not only information on the presence and/or absence and/or level of the liquid in the compartment (for example in the trap 1), but also one or more additional items of information. Advantageously, this additional information can be coded by making the digital signal generated by the control unit periodic, in particular the signal from the microcontroller 3, and associating a unique predetermined frequency with each additional item of information. Some of the additional information that the Applicant has advantageously anticipated can be communicated by the control unit, in particular by the microcontroller 3 of the sensor 9, 9*, to the control system of the electrical appliance (in particular the dishwasher), includes the occurrence of deposits on the compartment (for example on the trap 1) and/or contaminants in the compartment (for example in the trap 1) and/or leaks in the electrical appliance (for example in the dishwasher).

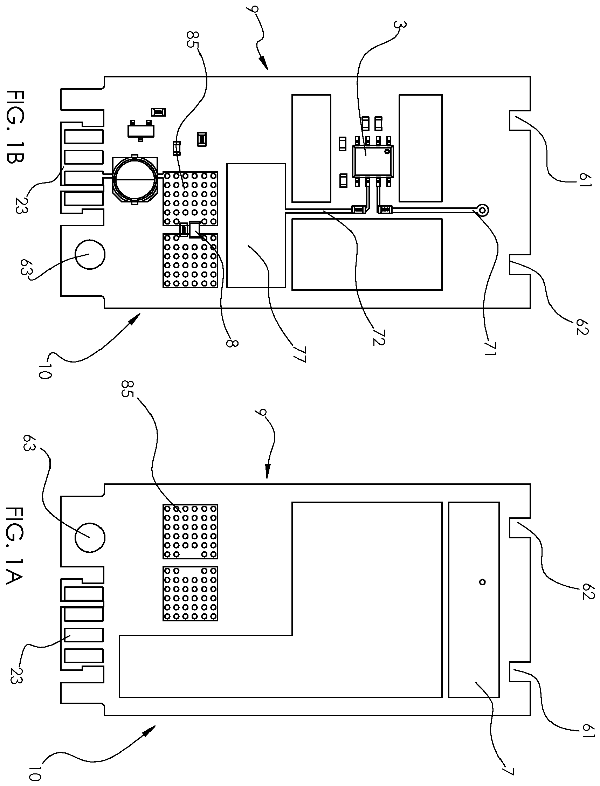

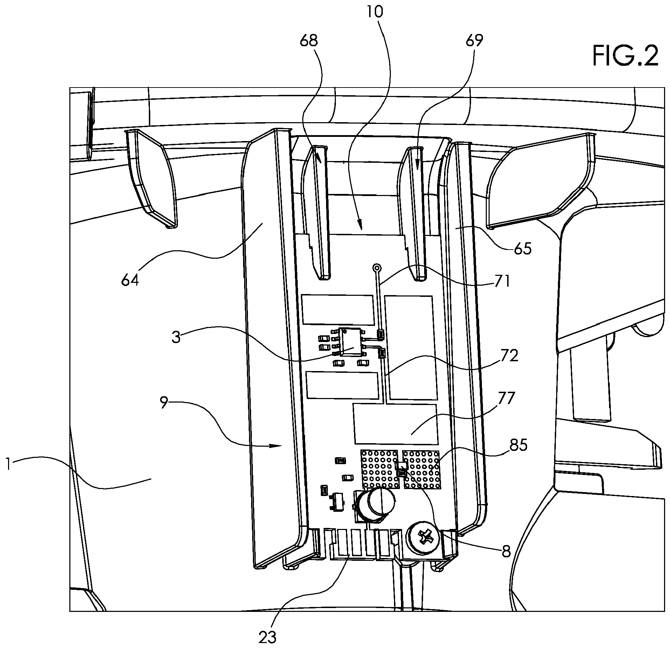

FIG.1A to FIG.3 show a first embodiment of the sensor 9 according to the invention, including when installed on a trap 1 of a dishwasher. A distinctive characteristic of the first embodiment of the invention is that the sensor 9 is configured to be applied to the outside of a wall of the compartment. If the sensor 9 is made to be installed in a dishwasher, the sensor 9 is configured to be applied to the outside of a wall of the wash tank or the trap 1. In FIG.2, the sensor 9 is shown installed on the outside of a lateral wall of the trap 1. This first embodiment of the sensor 9 is quite advantageous in terms of ease of installation, maintenance, and replacement of the sensor 9.

The sensor 9 includes a support 10 obtained by means of a PCB, with this PCB being made of a non-conductive, substantially rigid material such as fiberglass. Conductive tracks, for example in copper, are made in the PCB to create the appropriate electrical connection between the components of the sensor 9. The support 10 may be considered a fundamentally two-dimensional element, as its extension in the direction of thickness is significantly less than its extension in the two remaining directions. The form of the support 10 is made so that when the sensor 9 is installed, it remains adjacent to the outside wall of the compartment, in particular of the trap 1. Typically, the support 10 is made to be applied to a flat outside wall of the compartment, in particular of the trap 1, and therefore also has a flat form.

Advantageously, both surfaces of the support 10 are used to support the components of the sensor 9. In this way, in addition to optimizing the position of the components, the insulating properties of the PCB can be used advantageously to appropriately shield the components of the sensor 9 (principally the second sensing element 77), which when installed must not be influenced by the presence and/or absence and/or level of liquid in the compartment (for example in the trap 1).

The face of the sensor 9 shown in FIG.1A is the face of the sensor 9 which, when installed, is adjacent to the outside wall of the trap 1, while the face of the sensor 9 shown in FIG.1B is the opposite face and is thus the face of the sensor 9 that remains visible when installed.

The first sensing element 7 is positioned on the face of the sensor 9 which, when installed, is adjacent to the outside wall of the trap 1. Once the sensor 9 is applied to the trap 1, the position of the first sensing element 7 defines the predetermined level of liquid in the trap 1, that is the level of liquid in the trap 1 shown by the sensor 9 makes it possible to verify that this level has been reached. Preferably, the first sensing element 7 is placed on an upper portion of the support 10, so that, when the sensor 9 is applied to the trap 1, the predetermined level of liquid that the sensor 9 makes it possible to verify has been reached is located on the upper portion of the trap 1. Advantageously, the first sensing element 7 appropriately extends along the width of the sensor 9, so that the electrical capacity of the first sensing element 7 shows an appreciable variation when the liquid in the trap 1 reaches the predetermined level. If it is desired to verify that more than one level of liquid has been reached in the trap 1, the sensor 9 includes multiple sensing elements, placed at different heights on the face of the sensor 9, which when installed is adjacent to the outside wall of the trap 1.

The second sensing element 77 is instead positioned on the opposite face of the sensor 9. Interposition of the entire thickness of the PCB between the trap 1 and the second sensing element 77 makes the electrical capacity of the second sensing element 77 substantially independent from the presence and/or absence and/or level of liquid in the trap 1. Additional factors that can vary the electrical capacity of the first sensing element 7 (for example temperature) instead cause a similar variation in the electrical capacity of the second sensing element 77. Therefore, the second sensing element 77 makes it possible to determine the portion of the variation in capacity of the first sensing element 7 that is due to interfering inputs (for example temperature) and to isolate that portion from the remaining portion, which is instead due to variations in the presence of and/or level of liquid in the trap 1.

The microcontroller 3 is positioned on the face of the sensor 9 on which the second sensing element 77 is positioned. Advantageously, a temperature probe 8 is additionally placed on the same face and is capable of generating an output signal that varies based on the temperature of the liquid in the trap 1. Preferably, the temperature probe 8 is an NTC thermistor, that is a thermistor whose electrical resistance decreases as the temperature increases. To allow the temperature probe 8 to detect the temperature of the liquid in the trap 1 despite interposition of the insulating material constituting the PCB, metallized holes 85 acting as a thermal bridge are created in the region of the support 10 close to the temperature probe 8.

The temperature probe 8 is placed on the support 10 in a position where, once the sensor 9 is applied to the trap 1, the temperature probe 8 is lower than the first sensing element 7 (advantageously, the difference in height between the first sensing element 7 and the temperature probe 8 is between 20 mm and 30 mm). In this way, when the first sensing element 7 detects that the predetermined level of liquid has been reached, there is certainly liquid in the trap 1 at the level where the temperature probe 8 is located. Preferably, the temperature probe 8 is located on the central portion of the support 10, so that, once the sensor 9 is applied to the trap 1, the temperature probe 8 is located at a height corresponding to the central position of the trap 1. The Applicant has verified that this position of the sensor 9 relative to the trap 1 is very advantageous. As the temperature of the liquid in the trap 1 is not in general uniform, but stratified, and varies in a substantially linear manner as the distance from the bottom of the trap 1 increases, the temperature of the liquid in the central portion of the trap 1 (or in the portion where the temperature is detected by the temperature probe 8) is substantially the same as the average temperature of the liquid in the trap 1.

In the first embodiment of the sensor 9 according to the invention, shown in FIG.1A to FIG.3, the microcontroller 3 is operatively connected to the first sensing element 7 and to the second sensing element 77, respectively through the first electrical connection 71 and the second electrical connection 72, so that the microcontroller 3 can acquire the first parameter p, representing the electrical capacity of the first sensing element 7, and the second parameter s representing the electrical capacity of the second sensing element 77, and can then locally process the first parameter p and the second parameter s. This processing is in particular aimed at determining the presence or absence of liquid in the trap 1 and/or when liquid reaches the predetermined level in the trap 1, based on the difference between the first parameter p and the second parameter s. The microcontroller 3 is also operatively connected to the programming and/or debugging socket 45. In the first embodiment of the sensor 9 according to the invention, represented in FIG.1A to FIG.3, the microcontroller 3 is not operatively connected to the temperature probe 8, so that there is no local processing of the output signal by the temperature probe 8. Nevertheless, this invention should not be considered limited in this way, as the microcontroller 3 can be otherwise operatively connected to the temperature probe 8 so that the temperature probe 8 can locally process the output signal.

The sensor 9 includes methods of interfacing with the dishwasher's control system. In particular, these interfacing methods include an edge connector 23 through which the sensor 9 is electrically powered and can exchange signals and/or information with the dishwasher's control system. In the first embodiment of the sensor 9 according to the invention, shown in FIG.1A to FIG.3, the edge connector 23 is operatively connected to both the microcontroller 3 and to the temperature probe 8. Through the edge connector 23, the dishwasher's control system can receive one or more output digital signals from the microcontroller 3 and an output signal from the temperature probe 8. In the alternative or in addition to the edge connector 23, the interfacing methods of the sensor 9 can include a radio frequency communication node (in this case the sensor 9 can be powered by cable or by battery).

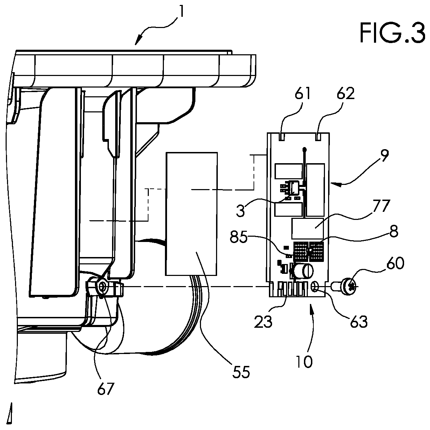

FIG.3 shows the preferred method of applying the sensor 9 to the outside surface of a wall of the compartment, in particular to the outside surface of a lateral wall of the trap 1, where the sensor 9 is glued to the outside surface of a wall of the compartment, in particular to the outside surface of a lateral wall of the trap 1. The material used to glue the sensor 9 is namely a thermally conductive material with a thermal conductivity greater than 1 W/(m·K). Advantageously, this gluing is achieved by means of a sheet 55 of double-sided tape in thermally conductive material interposed between the outside surface of a lateral wall of the trap 1 and the face of the sensor 9 on which the first sensing element 7 is positioned.

Gluing by means of double-sided tape sufficiently guarantees the stability and durability of application of the sensor 9 to the trap 1. Nevertheless, in order to affix the sensor 9 to the trap 1 in an even more stable and durable way, the sensor 9 can be equipped with means of affixing that work together with the means of affixing on the trap 1, to allow the sensor 9 to be fitted and/or screwed into the wall of the compartment, in particular of the trap 1. In a form of implementation reported purely for explanatory purposes, and not limited to such, the means of affixing the sensor 9 include a first recess 61 and a second recess 62 created on an edge of the support 10 and a hole 63 created in the support 10 near the edge opposite from which the first recess 61 and the second recess 62 are created. The first recess 61 and the second recess 62 are configured to connect the sensor 9 respectively to a first fork connection 68 and a second fork connection 69 created in one piece with the trap 1, while the hole 63 is configured to allow a screw 60 to pass through and then be screwed into a housing 67 created on the trap 1 (alternatively, the hole 63 can be used to fit in a boss made of one piece with the trap 1). Protrusions and recesses can be provided on any side of the sensor 9 so that the sensor can be mounted by fitting it into the wall of the trap 1. Finally, a first rib 64 and a second rib 65 can be created in one piece with the trap 1. The first rib 64 and the second rib 65, projecting from the surface of the trap 1, laterally delimit the housing region for the sensor 9 (see FIG.2 in particular), and can thus act as protective elements.

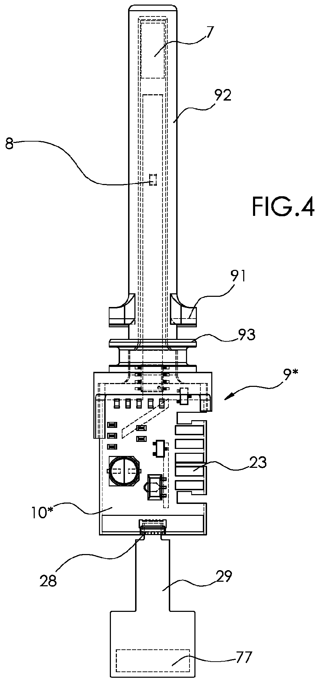

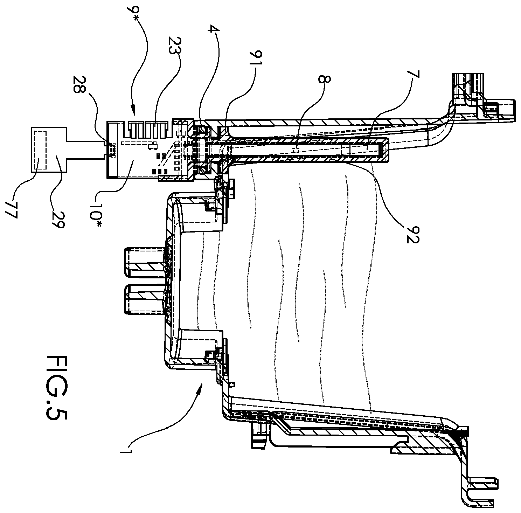

FIG.4 to FIG.6 show a second embodiment of the sensor 9* according to the invention, including when installed on a trap 1 of a dishwasher. A peculiar characteristic of the second embodiment of the invention is the fact that the sensor 9* is configured to be applied at least in part to the interior of the compartment. When the sensor 9* is made to be installed in a dishwasher, the sensor 9* is configured to be connected to the dishwasher through means that permit at least partial insertion of the sensor 9* into the wash tank or the trap 1. As shown in FIG.5, the sensor 9* is partially inserted into the trap 1 through an opening 2 made in the bottom wall of the trap 1 and is mechanically connected to the trap 1 so that the sensor 9* is inserted at a right angle to the bottom wall of the trap, that is substantially vertical. This second embodiment of the sensor 9* is significantly advantageous because it makes it possible to perfect control of existing electrical appliances (in particular dishwashers) without changing their structure, since the means of connection with which electrical appliances (in particular dishwashers) are traditionally equipped can be used to install the sensor 9*.

The sensor 9* includes a hollow casing 92 which is preferably essentially cylindrical in shape. Since the casing 92 is located inside the trap 1 when installed and thus comes into direct contact with the liquid that collects in the trap 1, a water-resistant and/or corrosion-resistant material can be used advantageously for the casing 92, such as calcium-filled polypropylene or talc-filled polypropylene.

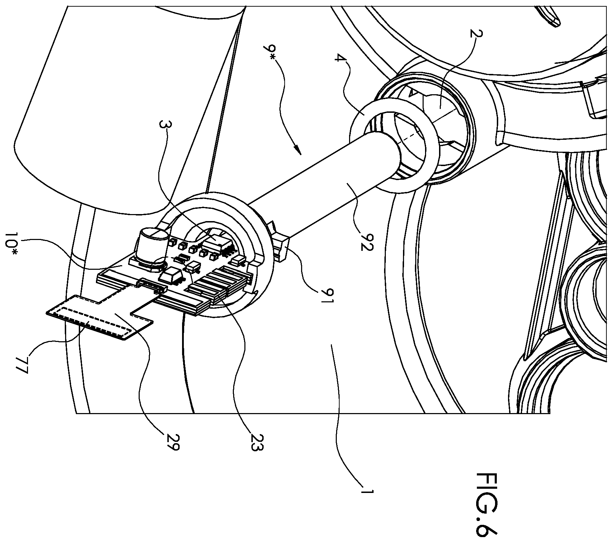

In a form of implementation of this invention, the casing 92 is configured so that a bayonet-type mechanical connection can be created with the bottom wall of the trap 1, as the opening 2 is configured for this purpose. In particular, the casing 92 includes, in one piece, both multiple protrusions 91 that can achieve the desired interference with the edges of the opening 2, by rotating the casing 92 within a preset range, and a blocking element 93 that prevents leakage between the casing 92 and the bottom wall of the trap 1. To guarantee an appropriate hold, the casing 92 is mounted to the bottom of the trap 1 using a ring gasket 4 made of elastic and/or deformable material that is associated with the blocking element 93, as visible in FIG.6.

The casing 92 houses a part of the support 10*, on which the first sensing element 7 and, if present, the temperature probe 8, are placed. Resin made of electrically insulating material, for example an epoxy resin or a polyurethane resin, is applied in the gap between the casing 92 and the support 10*, in order to remain interposed between the first sensing element 7 and the inner surface of the casing 92. As the support 10* does not extend far in the direction of width, one can advantageously increase the surface of the first sensing element 7 by ensuring that both faces of the support 10* are covered by the first sensing element 7 and/or using a multilayer PCB so that multiple conductive layers are created through which to distribute the surface of the first element 7. The first sensing element 7 is positioned near the end of the support 10*, while the temperature probe 8 (advantageously an NTC thermistor) is positioned on the support 10* so that, when the sensor 9* is installed, it is located significantly lower than the first sensing element 7 (advantageously the difference in height between the first sensing element 7 and the temperature probe 8 is between 20 mm and 30 mm) so that, when the first sensing element 7 detects that the predetermined level of liquid has been reached, there is certainly liquid in the trap 1 at the height at which the temperature probe 8 is located, as shown in FIG.5. If more than one level of liquid in the trap 1 is desired, the sensor 9* includes multiple sensing elements, placed at different heights within the casing 92.

The part of the support 10* outside the casing 92 is utilized to position additional components of the sensor 9*, such as the second sensing element 77 and/or the microcontroller 3 and/or the edge connector 23 and/or socket 45. In this way, when the sensor 9* is installed, the second sensing element 77 will be located lower than the trap 1, in particular lower than the bottom wall of the trap 1.

The Applicant has verified that this position of the second sensing element 77 relative to the compartment (for example relative to the trap 1) is quite advantageous. First of all, the electrical capacity of the second sensing element 77 is substantially unaffected by the presence and/or absence and/or level of liquid in the compartment (for example in the trap 1), while additional factors capable of varying the electrical capacity of the first sensing element 7 (for example temperature) cause a similar variation in the electrical capacity of the second sensing element 77. In the second place, any leaks within the electrical appliance (for example within the dishwasher) and in particular any leaks from the compartment (for example from the trap 1) can reach the second sensing element 77 by means of gravity, causing a considerable and recurring increase in the electrical capacity of the second sensing element 77. This is followed by a just as considerable and recurring increase in the second parameter s, which thus exceeds the predefined threshold value.

Advantageously, the second sensing element 77 is located on a distal portion 29 of the support 10*, which runs from the remaining portion of the support 10* away from the bottom wall of the trap 1. The distal portion 29 is made of a flexible material. If the electrical appliance where the sensor 9* is installed is a dishwasher, the flexible material of the distal portion 29 has the advantage of optimal behavior during the drop tests required by sector regulations. The sensor 9* includes a connector 28 for the mechanical and electrical connection between the distal portion 29 and the remaining portion of the support 10* (which is achieved through a PCB and is thus made of a substantially rigid material).

The peculiarity of the sensor according to this invention of being able to operate as a leak sensor (as well as a sensor that detects the presence and/or absence and/or level of liquid), by means of appropriately positioning the second sensing element 77 relative to the compartment (for example relative to the trap 1), was described with particular reference to the second embodiment of the sensor 9* in FIG.4 to FIG.6, or the embodiment that provides that the sensor 9* is configured to be applied, at least in part, inside the compartment (for example within the trap 1). Nevertheless, the Applicant firmly emphasizes that this invention should not be considered limited in this way, as this peculiarity of the sensor according to this invention can be achieved based on the first embodiment of the sensor 9 (that is the embodiment shown in FIG.1A to FIG.3, which provides that the sensor 9 is configured to be applied to the outside of a wall of the trap 1). For example, the second sensing element 77 may be positioned on a distal portion (similar to the distal portion 29 in the second embodiment of the invention but presumably greater in length) that is mechanically and electrically connected to the lower portion of the PCB, rather than on the surface of the PCB opposite to that on which the first sensing element 7 is positioned.

In light of the above, it can clearly be seen that, by adequately positioning the second sensing element 77 relative to the compartment (for example relative to the trap 1), the sensor 9, 9* according to this invention can be used not only as a sensor to detect the presence and/or absence and/or level of liquid in the compartment (for example in the trap 1), but also as a sensor to detect leaks in the electrical appliance (for example within the dishwasher). The ability to use the sensor 9, 9* according to this invention to detect leaks eliminates the need to equip the electrical appliance with a sensor dedicated exclusively to detecting leaks. If the electrical appliance is a dishwasher, this invention thus makes it possible to avoid installation of the leak detection sensor commonly installed below the wash tank and which usually consists of a collection basin associated with a float switch, without compromising or reducing the safety of the dishwasher in any way. Instead, when used as a leak sensor, the sensor 9, 9* according to this invention makes it possible to detect any leaks (and thus address them by interrupting the supply of tap water and/or by activating the discharge pump and/or generating a specific signal for the user) much more quickly than traditional leak sensors, which require the collection basin to fill up enough to cause the float switch to turn on. In addition, compared to traditional leak sensors, the sensor 9, 9* according to this invention is considerably less likely to malfunction and/or break, as it has no mechanical parts. Finally, by integrating diverse types of the sensors in a single device, the sensor 9, 9* according to this invention creates clear benefits in terms of cost and simplicity of installation.

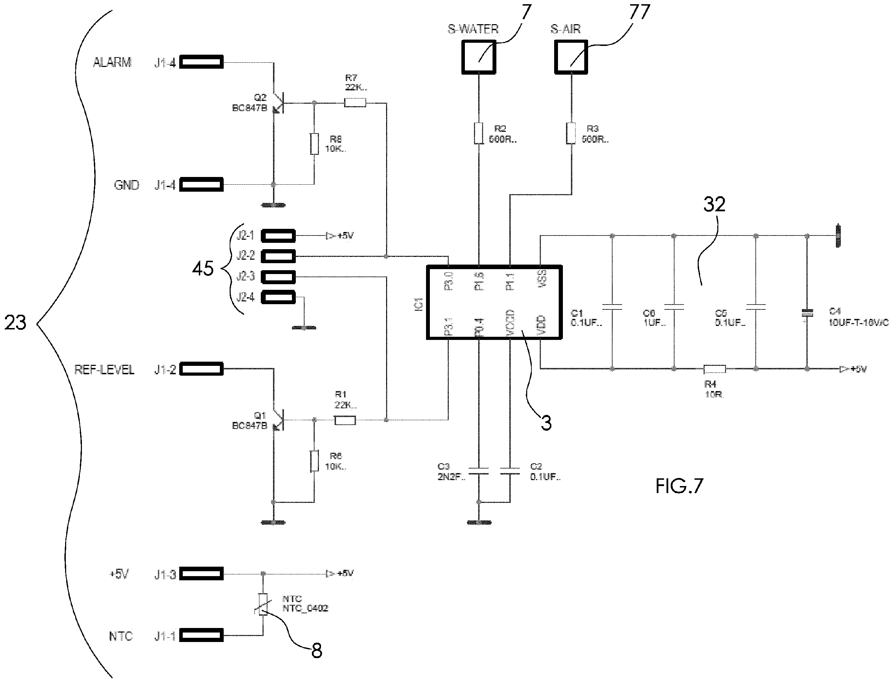

FIG.7 shows just one example of the wiring diagram of a sensor 9, 9* according to this invention. The peculiarity of that wiring diagram is to provide two distinct outputs for the microcontroller 3, dedicated respectively to transmitting a digital output signal that codes information on the presence and/or absence and/or level of liquid in the compartment (for example in the trap 1), along with any other information, and transmission of a digital output alarm signal that reports leaks in the electrical appliance (for example in a dishwasher). Therefore, the wiring diagram in FIG.7 can be conveniently adopted in combination with the second embodiment of the sensor 9* according to the invention in FIG.4 to FIG.6, but also in combination with the first embodiment of the sensor 9 according to the invention in FIG.1A to FIG.3 when the second sensing element 77 is also suitable for detecting leaks in the electrical appliance (for example in a dishwasher).

According to the wiring diagram in FIG.7, the control unit of the sensor 9, 9* uses a microcontroller 3 powered by direct current whose ports (there are eight in the example shown in FIG.7) can be programmed to act as inputs or outputs. FIG.7 shows solely the ports of the microcontroller 3, and does not show the internal components of the microcontroller 3, such as memory, registries, timing units, subsystems, and so forth, as this invention is made for the utilization of microcontrollers available on the market.

The ports of the microcontroller 3 shown in FIG.7 are of the configurable type. In FIG.7, the connections of the edge connector 23 and the port 45 are indicated respectively by J1 and J2, followed by the specific number of each connection. The VDD and VSS ports of the microcontroller 3 are connected to the power supply unit 32. The ports VCCD and P0.4 are connected to the capacity of reference C3. The ports P1.6 and P1.1 are programmed as input ports of the microcontroller 3 and are connected respectively to the first sensing element 7 and the second sensing element 77, with the heating element interposed both between the first sensing element 7 and the microcontroller 3, and between the second sensing element 77 and the microcontroller 3. The signals coming into the ports P1.6 and P1.1 depend respectively on the electrical capacity of the first sensing element 7 and the electrical capacity of the second sensing element 77, so that the microcontroller receives respectively the first parameter p and the second parameter s from the incoming signals to the ports P1.6 and P1.1.

The ports P3.1 and P3.0 are programmed as output ports of the microcontroller 3 and are respectively connected to the connection J1-2 of the edge connector 23 and the connection J1-5 of the edge connector 23, as the connection J1-2 is the connection of the edge connector 23 responsible for transmitting the output signal that codes the information on the presence and/or absence and/or level of liquid in the compartment (for example in the trap 1) and the connection J1-5. The connection of the edge connector 23 is instead responsible for transmitting the alarm output signal reporting leaks in the electrical appliance (for example in the dishwasher). Therefore the output signal of the microcontroller 3 received through the connection J1-2, informs the control system of the electrical appliance (for example the dishwasher) of the presence or absence of liquid in the compartment (for example in the trap 1) and/or whether the predetermined level of liquid in the compartment has been reached (for example in the trap 1), so that this can be considered for purposes of controlling electrical loads in the electrical appliance (for example the dishwasher). The control system of the electrical appliance (for example the dishwasher) is instead informed of leaks within the electrical appliance (for example in the dishwasher) through the output signal of the microcontroller 3 received through the connection J1-5, so that this can be considered to activate an alarm in the electrical appliance (for example the dishwasher).

The wiring diagram in FIG.7 shows in particular how the connections J1-2 and J1-5 of the edge connector 23 are associated with the respective transistors Q1 and Q2. In particular, the transistors Q1 and Q2 are both of the NPN type, with bases respectively connected to the ports P3.1 and P3.0 of the microcontroller 3, collectors respectively connected to the connections J1-2 and J1-5 of the edge connector 23, and emitters connected to the earth. In the wiring diagram in FIG.7 it can also be seen that the ports P3.1 and P3.0 of the microcontroller 3 are also connected to the respective connections J2-3 and J2-2 provided on the socket 45, which make it possible to program and/or debug the microcontroller 3. Alternatively, the transistors Q1 and Q2 can be the PNP type.

In the wiring diagram in FIG.7, the connection J1-1 of the edge connector 23 is connected to the temperature probe 8. The control system of the electrical appliance (for example the dishwasher) thus receives the output signal from the temperature probe 8 through the connection J1-1 and in this way can determine the temperature of the liquid within the compartment (for example within the trap 1), so it can be considered in order to control the electrical loads of the electrical appliance (for example the dishwasher). The output signal of the temperature probe 8 is analog. The architecture on which the wiring diagram in FIG.7 is based thus provides that the output signals from the first sensing element 7 and the second sensing element 77 are processed locally, while the output signal from the temperature probe 8 is processed by the control system of the electrical appliance (for example the dishwasher). However, a concurrent architecture where the output signal from the temperature probe 8 is processed locally, and a concurrent architecture where the output signal from the first sensing element 7 and from the second sensing element 77 is processed by the control system of the electrical appliance (for example the dishwasher), are possible within the scope of this invention.

This invention also regards a method for detecting the presence and/or level of liquid in a compartment of an electrical appliance, such as a dishwasher. The method according to this invention provides for the execution of four distinct phases.

The first distinct phase consists of acquiring a first parameter p from a first sensing element 7. The second distinct phase consists of acquiring a second parameter s from a second sensing element 77. The third distinct phase consists of calculating the difference between the first parameter p and the second parameter s. The fourth distinct phase consists of obtaining at least one item of information on the presence or absence of liquid in a compartment, in particular in a trap 1 and/or in a wash tank of a dishwasher, and/or at least one item of information on liquid potentially reaching a predetermined level in a compartment, in particular in a trap 1 and/or in a wash tank of a dishwasher, based on the difference between the first parameter p and the second parameter s.

In an advantageous application of the method according to this invention, both the first sensing element 7 and the second sensing element 77 are of the capacitive type.

The at least one item of information on the presence or absence of liquid in the compartment (for example in the trap 1) and/or potential reaching of a predetermined level by the liquid in the compartment (for example in the trap 1) is obtained by comparing the difference between the first parameter p and the second parameter s with a predefined value. Advantageously, an adequately wide hysteresis is provided for the predefined value that makes the value corresponding to a presence of liquid and/or a level of liquid equal to or greater than the predetermined level starting from the absence of liquid and/or level of liquid below the predetermined level greater than the value corresponding to an absence of liquid and/or a level of liquid below the predetermined level starting from the presence of liquid and/or level of liquid equal to or greater than the predetermined level. Said hysteresis is effective in avoiding instability when the difference between the first parameter p and the second parameter s is quite close to the predefined value and/or fluctuates around the predefined value.

In order to optimize the reliability of detection of the presence and/or level of liquid in the compartment (for example in the trap 1) of an electrical appliance (eliminating or significantly reducing interfering inputs due to any disturbances), the method according to this invention can include a calculation of the first parameter p and the second parameter s as average values of a predefined number of receptions from the first sensing element 7 and the second sensing element 77. Similarly, the method according to this invention can advantageously include multiple calculations of the difference between the first parameter p and the second parameter s and then extracting the average value from the multiple differences previously calculated.

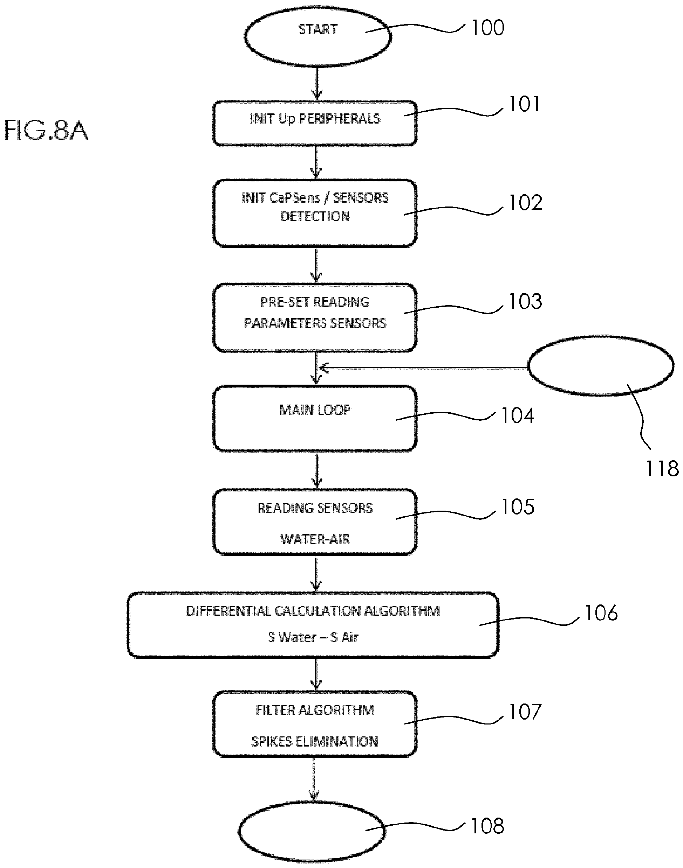

FIG.8A to FIG.8C use a flow chart to represent an algorithm that constitutes a form of implementation of the detection method according to this invention (this form of implementation can in particular be performed by the control unit, for example by the microcontroller 3, of the sensor 9, 9*). More in detail, FIG.8A to FIG.8C represent successive portions of a single algorithm, given that connection blocks are provided between FIG.8A to FIG.8C.

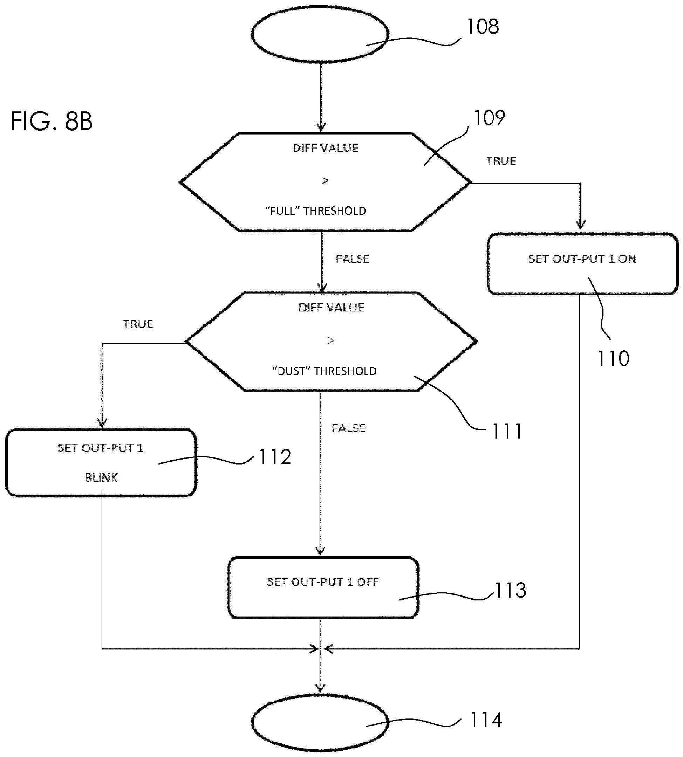

After the starting block 100, preliminary blocks 101, 102 and 103 are executed. One then proceeds to block 104, which represents the start of the recursive phase of the algorithm. Block 105 thus acquires the first parameter p and the second parameter s respectively from the output signal of the first sensing element 7 and the output signal of the second sensing element 77. In block 106 the difference is calculated between the first parameter p and the second parameter s. In block 107, any disturbances and/or incoming interfering inputs that could alter a precise determination of the difference between the first parameter p and the second parameter s are filtered. This filtering operation could include calculation of the average values of the first parameter p and the second parameter s or the difference between the first parameter p and the second parameter s and/or the elimination of peak values of the first parameter p and the second parameter s or the difference between the first parameter p and the second parameter s, identifying the peak values as values that diverge too significantly from the average values and/or the values immediately before and/or immediately after. One then proceeds to connection block 108 between the portion of algorithm in FIG.8A and the portion of algorithm in FIG.8B.

Block 109 represents the first iterative block of the method of detection according to this invention, where the difference between the first parameter p and the second parameter s is compared with the first predefined value, if necessary corrected within a respective hysteresis. If the difference between the first parameter p and the second parameter s is greater than the first predefined value, it proceeds to block 110 where information is obtained that liquid is present in the compartment (for example in the trap 1) and/or that the level of liquid in the compartment (for example in the trap 1) is equal to or greater than the predetermined level and thus generates and then transmits the signal that codes this information, this signal being a continuous digital signal with a constantly high logic level (or a continuing digital signal with a constantly low logic level in case of denied logic).

Otherwise, that is if the difference between the first parameter p and the second parameter s is less than the first predefined value, it advantageously proceeds to block 111 which represents the second iterative block in the detection method according to this invention. In block 111, the difference between the first parameter p and the second parameter s is compared with a second predefined value, if necessary appropriately corrected within a respective hysteresis. As the second predefined value is less than the first predefined value, if the comparison for block 111 produces an affirmative result, information is obtained that liquid is present in the compartment (for example in the trap 1) and/or that the level of liquid in the compartment (for example in the trap 1) is equal to or greater than the predetermined level, in combination with the information that deposits are present on the compartment (for example in the trap 1) and/or that contaminants are present in the compartment (for example in the trap 1). If the difference between the first parameter p and the second parameter s is less than the first predetermined value, but greater than the second predetermined value, it is deduced that the electrical capacity of the first sensing element 7 exceeds the electrical capacity of the second sensing element 77 by a quantity sufficient to ascertain the presence of liquid in the compartment (for example in the trap 1) and/or that the predetermined level has been reached in the compartment (for example in the trap 1), but not a quantity sufficient to ascertain optimal operating conditions for the electrical appliance (for example the dishwasher), as the compartment (for example the trap 1) shows a substantial absence of deposits and/or the liquid in the compartment (for example in the trap 1) contains substantially no contaminants. For example, a difference between the first parameter p and the second parameter s less than the first predetermined value and greater than the second predetermined value may exist when the compartment (for example the trap 1) is full of liquid and clumps of solid grease have adhered to the walls of the compartment (for example of the trap 1), the clumps of grease acting as insulating particles and thus reducing the detection of the first sensing element 7.

If the difference between the first parameter p and the second parameter s is greater than the second predefined value, one proceeds to block 112, which provides the information that liquid is present in the compartment (for example in the trap 1) and/or that the level of liquid in the compartment (for example in the trap 1) is equal to or greater than the predetermined level and that deposits are present on the compartment (for example on the trap 1) and/or that contaminants are present in the compartment (for example in the trap 1). Block 112 then generates the signal that codes this information. According to the preferred form of implementation of this invention, the information in block 112 is coded through a digital signal that is then transmitted through the same line of communication used to transmit the digital signal for block 110. In order to be distinguished from the digital signal in block 110, the digital signal in block 112 is a periodic signal where high logic level alternates with low logic level at a first predetermined frequency (for example 10 kHz). Therefore, according to the preferred form of implementation for this invention, if the control system of the electrical appliance (for example the dishwasher) receives a continuous signal that constantly has a high logic level, then it obtains the information that liquid is present in the compartment (for example in the trap 1) and/or that the level of liquid in the compartment (for example in the trap 1) is equal to or greater than the predetermined level and that there are substantially no deposits on the compartment (for example on the trap 1) and/or that there are substantially no contaminants in the compartment (for example in the trap 1), while if the control system of the electrical appliance (for example the dishwasher) receives a periodic signal with the frequency of the first predetermined frequency, then it obtains the information that liquid is present in the compartment (for example in the trap 1) and/or that the level of liquid in the compartment (for example in the trap 1) is equal to or greater than the predetermined level and that there are deposits on the compartment (for example on the trap 1) and/or that there are contaminants in the compartment (for example in the trap 1). According to an alternative form of implementation of this invention, the information in block 112 is coded through a digital signal (for example a continuous digital signal with a constantly high logic level) that is then transmitted through a line of communication distinct from that used to transmit the digital signal in block 110.

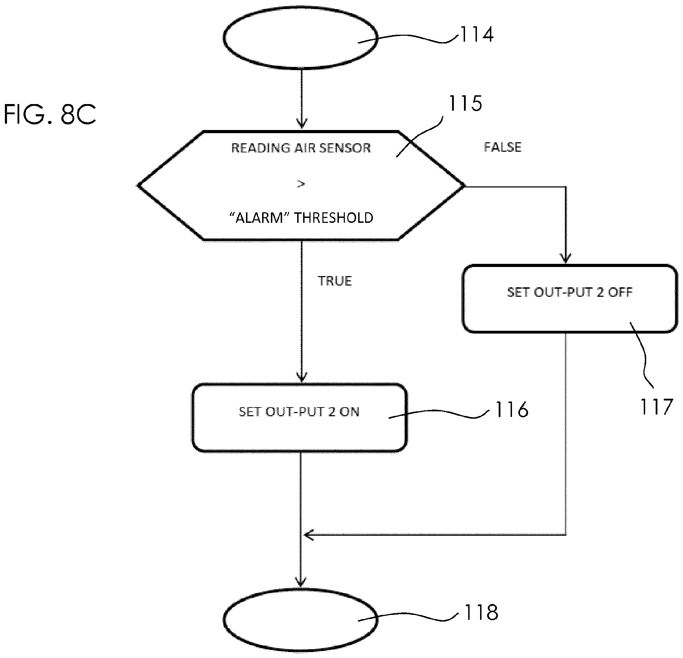

If the difference between the first parameter p and the second parameter s is instead less than the second predefined value, one proceeds to block 113, where the information is obtained that there is no liquid in the compartment (for example in the trap 1) and/or that the level of liquid in the compartment (for example in the trap 1) is lower than the predetermined level, and where the signal is thus generated that codes this information. According to the preferred form of implementation of this invention, the information in block 113 is coded through a continuous digital signal with a constantly low logic level. In other words, the information in block 113 is transmitted to the control system of the electrical appliance (for example the dishwasher) in the form of an absence of signal on the line of communication used to transmit the digital signal in block 110. Blocks 110, 112 and 113 are thus reunited in connecting block 114 between the portion of algorithm in FIG.8B and the portion of algorithm in FIG.8C.

Advantageously, the algorithm includes block 115, which represents a third iterative block of the method of detection according to this invention, where the second parameter s is compared with a predefined threshold value. If the second parameter s is greater than the predefined threshold value, one proceeds to block 116, where the information is obtained that there are leaks within the electrical appliance (in particular in the dishwasher). In fact, a value of the second parameter s greater than the predefined threshold value can be reached only if, for example after leakage and/or breakage, the liquid comes into contact with the second sensing element 77, causing a considerable and repeated increase in the electrical capacity of the second sensing element 77. According to the preferred form of implementation of this invention, the information in block 116 is coded through a digital signal that is then transmitted through an alarm line of communication distinct from the line of communication used to transmit the digital signal of block 110 and the digital signal of block 112. The information in block 116 is coded through a digital signal (for example a continuous digital signal with a constantly high logic level) that, after being generated by the microcontroller 3, is transmitted to the control system of the electrical appliance (for example the dishwasher) through an alarm line of communication. Being equipped with an alarm line of communication distinct from the line of communication adopted to transmit information on the presence and/or absence and/or level of liquid in the compartment (for example in the trap 1) advantageously permits this last line of communication to remain available even in alarm situations.

If the second parameter s is instead lower than the predefined threshold value, one proceeds to block 117, where the information is obtained that there are substantially no leaks within the electrical appliance (in particular in the dishwasher) and that therefore there have been no leakages and/or breakages. According to the preferred form of implementation of this invention, the information in block 117 is coded through a continuous digital signal on the alarm line of communication with a constantly low logic level. Blocks 116 and 117 are thus reunited in block 118, which by connecting the portion of algorithm in FIG.8C to the portion of algorithm in FIG.8A, recommences the recursive phase in block 104.

This invention also includes a method that uses a digital signal to code information regarding a compartment of an electrical appliance, such as, for example, a dishwasher. The method according to this invention provides for the execution of two particular phases.

In a first phase of the coding method, the logic level is set (low or high, that is equal to zero or equal to 1) for the digital signal in order to code a first item of information. In a second phase of the coding method, the digital signal is generated as a continuous signal or as a periodic signal in order to code at least a second item of information. The coding method according to this invention thus makes it possible to use a unique digital signal to code at least two distinct items of information. By then assigning each item of information a particular frequency, it is possible to use a unique digital signal to code more than two distinct items of information.

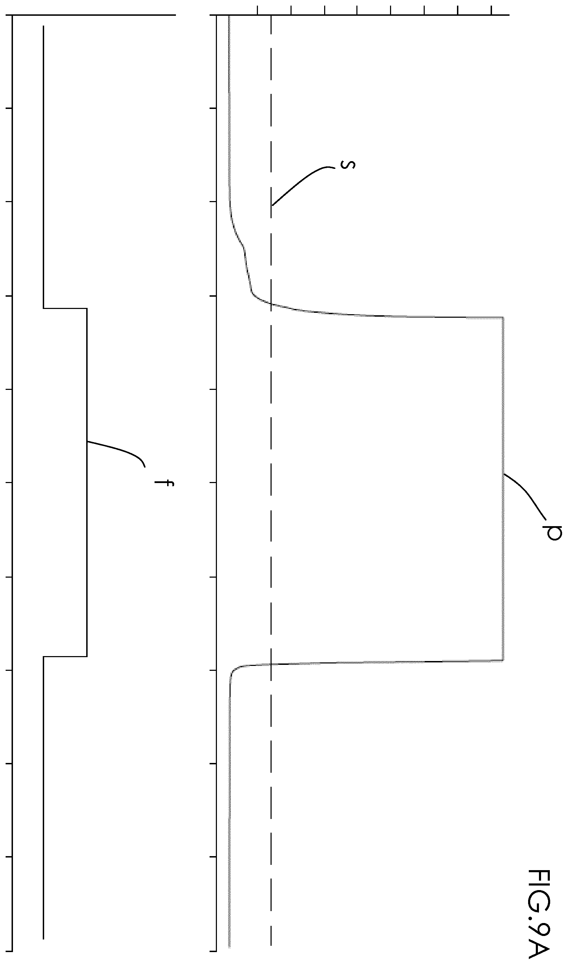

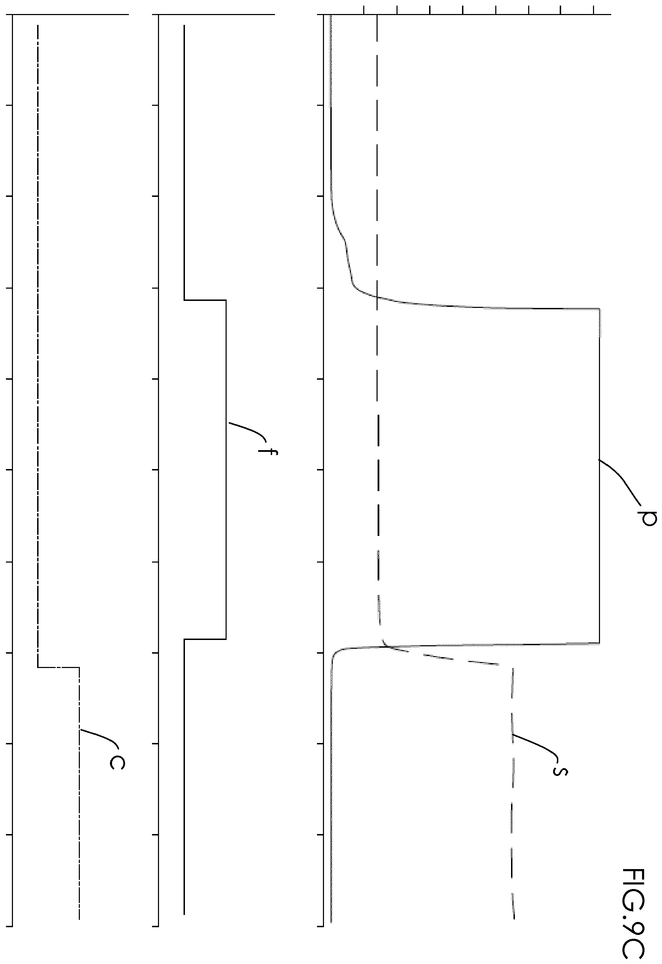

FIG.9A to FIG.9C show possible digital signals generated through the coding method according to this invention. The digital signals shown in FIG.9A to FIG.9C can be generated by the control unit, for example by the microcontroller 3, of the sensor 9, 9*, when executing the detection method described above, in particular in concomitance with blocks 110 and/or 112 and/or 113 and/or 116 and/or 117. The curves in FIG.9A to FIG.9C show possible performance of the first parameter p over time, representing the electrical capacity of the first sensing element 7, and/or of the second parameter s, representing the electrical capacity of the second sensing element 77, when the sensor 9, 9* including the first sensing element 7 and the second sensing element 77 is in particular applied to the trap 1 to detect the presence and/or absence and/or level of liquid in the trap 1. FIG.9A to FIG.9C show a unique digital signal for coding two or more items of information, while FIG.9C instead shows a pair of digital signals for coding two or more items of information. The method according to this invention can be implemented by means of the sensor 9, 9* when, for example, the wiring diagram of that the sensor reproduces the teachings in FIG.7 (in particular, the J1-2 and J1-5 connections of the edge connector 23 can be used to transmit the digital signals in FIG.9A to FIG.9C).

In FIG.9A, the sensor 9, 9* is activated with the trap 11 empty, so the first parameter p is initially less than the second parameter s. The difference between the first parameter p and the second parameter s is thus clearly less than both the first predefined value and the second predefined value, so that the predetermined level of liquid in the trap 11 is considered not reached. This condition is uniquely coded by the microcontroller 3 of the sensor 9, 9*, maintaining the coding signal f constantly at its low logic level, that is, at the logic level of 0. Water is then loaded into the dishwasher, in order to fill the trap 11 up to the predetermined level (for example the dishwasher's control system commands the conveyance of water from the system by opening the electrovalve). The level of liquid in the trap 11 increases, but the first parameter p remains lower than the second parameter s, as the shielding methods applied to the sensor 9, 9* prevent the electrical capacity of the first sensing element 7 (and consequently the first parameter p) from undergoing appreciable variations before reaching the predetermined level. When the quantity of water loaded into the dishwasher is such that the level of liquid in the trap 11 reaches the predetermined level, the first parameter p undergoes a significant and repeated increase, so that the difference between the first parameter p and the second parameter s exceeds the first predefined value. Consequently, the microcontroller 3 of the sensor 9, 9*, switches the logic level of the coding signal f, bringing it to its high logic level, that is, the logic level of 1 (in case of denied logic, the switch in the logic level of the coding signal when the difference between the first parameter p and the second parameter s exceeds the first predefined value would instead be a switch from its high logic level to its low logic level). Once the variation in the logic level of the coding signal f is detected, the dishwasher's control system commands an interruption in water input from the system (for example by closing the electrovalve). The coding signal f constantly maintains its high logic level, until the dishwasher's control system commands the drainage of water from the trap 11 (for example by activating the discharge pump). As soon as the level of liquid in the trap 11 drops below the predetermined level, the first parameter p undergoes a significant and repeated decrease, so that the difference between the first parameter p and the second parameter s immediately returns to below the first predefined value. Consequently, the microcontroller 3 of the sensor 9, 9* switches the logic level of the coding signal f, again returning it to its low logic level, that is, the logic level of 0 (or its high logic level in case of denied logic).

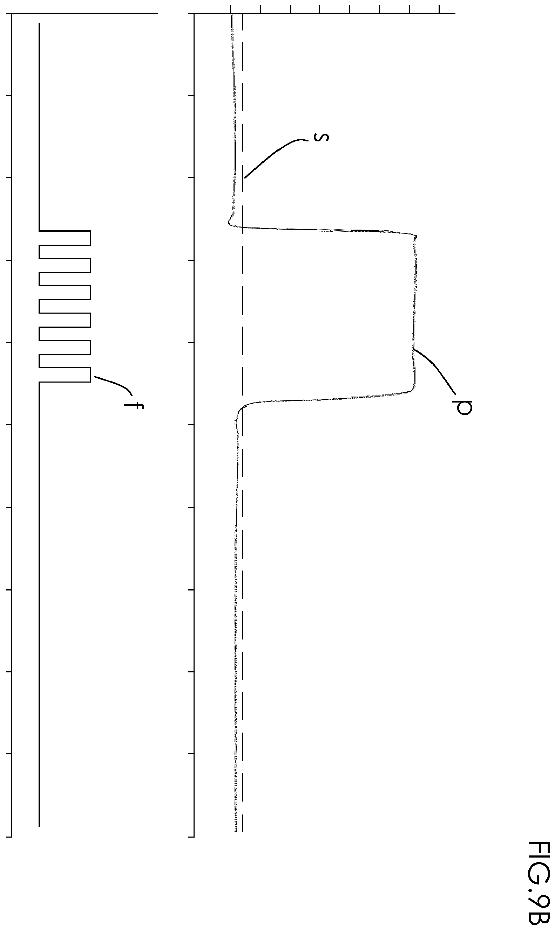

FIG.9B differs from FIG.9A given that, when the quantity of water loaded into the dishwasher is such that the liquid in the trap 11 reaches the predetermined level, the first parameter p undergoes a significant and repeated increase. The difference between the first parameter p and the second parameter s is not, however, such that it exceeds the first predefined value, but exceeds only the second predefined value. Consequently, the microcontroller 3 of the sensor 9, 9*, deduces that deposits are present on the trap 1 and/or that contaminants are present in the trap 1. This combination of information (predetermined level of liquid reached and occurrence of deposits and/or contaminants) is coded by the microcontroller 3 of the sensor 9, 9* by switching the coding signal f into a periodic signal where high logic level and low logic level alternate at a predetermined frequency. Once the first predetermined frequency of the coding signal f is detected, the dishwasher's control system activates the consequent commands (for example activation of a self-cleaning cycle) and/or sends the consequent signals to the user (for example by turning on a dedicated light).

FIG.9C shows a possible trend in the second parameter s, which at a certain point undergoes a significant and repeated increase, becoming greater than the predefined threshold value. Leaks in the dishwasher have reached the second sensing element 77 and have consequently caused a considerable and repeated increase in the electrical capacity of the second sensing element 77. Having thus obtained the information that there are leaks in the dishwasher, the microcontroller 3 of the sensor 9, 9* codes the information on leaks in the dishwasher by means of an alarm signal c distinct from the coding signal f used to code the information on the presence and/or absence and/or level of liquid in the trap (along with any information on deposits on the trap 1 and/or contaminants in the trap 1). In particular, the alarm signal c is a digital signal that maintains its low logic level, that is, the logic level of 0, in the absence of leaks, and that switches its logic level, going to its high logic level, that is the logic level of 1, when the second parameter s is greater than the predefined threshold value, which occurs if there are leaks in the dishwasher. In case of denied logic, the alarm signal c is a digital signal that maintains its high logic level, that is the logic level of 1, in the absence of leaks, and that switches its logic level, going to its low logic level, that is a logic level of 0, when the second parameter s is greater than the predefined threshold value, which occurs if there are leaks in the dishwasher.

This invention also includes a sensor, made to be installed in an electrical appliance and capable of detecting both the presence and/or the level of liquid in a compartment of the electrical appliance, and the temperature of the liquid in the compartment of said electrical appliance, as well as the electrical appliance to which this sensor is applied. In order to perform its function, the sensor includes at least a first sensing element capable of generating an output signal that varies based on the presence or absence of liquid in the compartment and/or that varies based on the level of liquid in the compartment, a temperature probe capable of generating an output signal that varies based on the temperature of the liquid in the compartment, and a support on which the first sensing element and the temperature probe are placed. A particular feature of the sensor according to this invention is that it is configured to be applied to the outside of a wall of the compartment, for example a lateral wall of the compartment.

The sensor 9 according to this invention can be optimally installed on a wash and/or rinse tank or on a trap 1 of a dishwasher, to detect the presence and/or absence and/or level of liquid in said tank or in said trap 1, in combination with the temperature of the liquid in that tank or in that trap 1. Nevertheless, this invention contemplates excellent applications of the sensor 9 on the compartments of other electrical appliances as well, for example on the boiler of a coffeemaker, or on the condensation tray and/or the condensate collection reservoir of a clothes dryer, or on the water tank and/or boiler of a steam oven, or on the water tank of a boiler. The sensor 9 is also excellent for installation on non-domestic electrical appliances (for example industrial equipment) where the presence and/or level of liquid must be monitored in devices such as tanks or similar equipment.

An embodiment of the sensor according to this invention can easily be seen in the sensor 9 represented in FIG.1A to FIG.3, where the first sensing element 7 is a capacitive type and is placed on the support 10 (made of an insulating material and obtained, for example, through a PCB) in a position where, when the sensor 9 is installed in the dishwasher, the electrical capacity of the first sensing element 7 is sensitive to variations in the presence and/or level of liquid in the compartment.

The first sensing element 7 is notably positioned on the face of the sensor 9, which when installed is adjacent to the outside wall of the trap 1. Advantageously, the geometrical shape of the support 10, at least in the portion on which the first sensing element 7 is placed, is joined to the geometrical shape of the outside lateral wall of the trap 1, so that the first sensing element 7 can be adjacent to the outside lateral wall of the trap 1. If the outside surface of the lateral wall of the trap 1 on which the sensor 9 is applied is substantially flat, consequently the support 10 can also be conveniently made in the form of a flat element.

Once the sensor 9 is applied to the trap 1, the position of the first sensing element 7 defines the predetermined level of liquid in the trap 1, that is the level of liquid in the trap 1 as per the sensor 9 makes it possible to verify that it has been reached. Preferably, the first sensing element 7 is placed on an upper portion of the support 10, so that, when the sensor 9 is applied to the trap 1, the predetermined level of liquid as per the sensor 9 makes it possible to verify that any level reached is positioned on the upper portion of the trap 1. Advantageously, the first sensing element 7 appropriately extends along the width of the sensor 9, so that the electrical capacity of the first sensing element 7 shows an appreciable variation when the liquid within the trap 1 reaches the predetermined level.

In the embodiment of the sensor 9 represented in FIG.1A to FIG.3, the temperature probe 8 is placed on the support 10 in such a position that once the sensor 9 is installed in the dishwasher, the electrical heating element of the temperature probe is sensitive to variations in the temperature of the liquid in the trap 1. The temperature probe 8 capable of generating an output signal that varies based on the temperature of the liquid in the trap 1 is advantageously an NTC thermistor, that is a thermistor whose electrical resistance decreases as temperature increases. Alternatively, the temperature probe 8 may be a PTC or thermal resistance thermistor. If the temperature probe 8 is placed on the face of the sensor 9 opposite that on which the first sensing element 7 is placed (that is, on the face opposite that adjacent to the outside lateral wall of the trap 1 when the sensor 9 is installed), to permit the temperature probe 8 to detect the temperature of liquid in the trap 1 and allow the interposition of insulating material constituting the PCB, metallized holes 85 acting as a thermal bridge are created in the region of the support 10 near the temperature probe 8.

The temperature probe 8 is placed on the support 10 in a position so that, once the sensor 9 is applied to the trap 1, the temperature probe 8 is lower than the first sensing element 7 (the most advantageous difference in height between the first sensing element 7 and the temperature probe 8 is between 20 mm and 30 mm). In particular, when the sensor 8 is installed, the difference in height between the first sensing element 7 and the temperature probe 8 is comparable to the difference in height between the temperature probe 8 and the bottom wall of the trap 1. In this way, when the first sensing element 7 detects that the predetermined level of liquid has been reached, there is certainly liquid in the trap 1 at the height of the temperature probe 8. The temperature probe 8 preferably is located on the central portion of the support 10, so that once the sensor 9 is applied to the trap 1, the temperature probe 8 will be at a height corresponding to the central portion of the trap 1. The Applicant has verified that this position of the sensor 9 relative to the trap 1 is quite advantageous. As the temperature of the liquid in the trap 1 is not generally uniform, but stratified, and varies in substantially linear fashion as the distance from the bottom of the trap 1 increases, the temperature of the liquid in the central portion of the trap 1 (or in the portion whose temperature is detected by the temperature probe 8) substantially coincides with the average temperature of the liquid in the trap 1.

Advantageously, the sensor 9 also includes a second capacitive-type sensing element 77, placed on the support 10 in a position so that, once the sensor 9 has been installed in the dishwasher, the electrical capacity of the second sensing element is not sensitive to variations in the presence and/or level of said liquid in the trap 1. Advantageously, the second sensing element 77 is placed on the face of the support 10 opposite the face of the support 10 on which the first sensing element 7 is placed and therefore, when the sensor 9 is installed, the second sensing element 77 is not positioned adjacent to the lateral wall of the trap 1. Advantageously, the second sensing element 77 is placed on a portion of the support 10 made of flexible material which, once the sensor 9 has been installed in the dishwasher, forms the lower portion of the support 10 and is placed lower than the bottom wall of the trap 1.

The second sensing element 77 may be assigned the function of making detection by the first sensing element 7 of the presence and/or level of liquid in the trap 1 more solid, reliable and precise, given that by means of the second sensing element 77 one may determine the portion of the variation in capacity of the first sensing element 7 due to interfering inputs such as temperature (which makes it possible to then isolate this portion from the remaining portion, which is instead due to variations in the presence and/or level of liquid in the trap 1). In addition or in the alternative, the second sensing element 77 may be assigned the function of detecting leaks in the dishwasher, in particular leaks from the trap 1.

The sensor 9 includes an electronic control unit, in particular a microcontroller 3. The microcontroller 3 is operatively connected to the first sensing element 7 and/or to the second sensing element 77 and/or to the temperature probe 9 and is configured to perform local processing of the signals received from the first sensing element 7 and/or from the second sensing element 77 and/or from the temperature probe 9. The sensor 9 advantageously includes a socket 45 to permit programming and/or debugging of the electronic control unit, in particular the microcontroller 3.

The microcontroller 3 can communicate with the dishwasher's electronic control system 1 through a digital line of communication. To this end, the sensor 9 has appropriate methods for interfacing with the dishwasher's control system. In particular, these interfacing methods include an edge connector 23 which electrically powers the sensor 9 and can exchange signals and/or information with the dishwasher's control system. In the embodiment of the sensor 9 according to the invention, just one example of which is shown in FIG.1A to FIG.3, the edge connector 23 is operatively connected to both the microcontroller 3 and to the temperature probe 8. Through the edge connector 23, the dishwasher's control system can receive one or more digital signals from the microcontroller 3 and the signal from the temperature probe 8. In the alternative or in addition to the edge connector 23, the interfacing methods of the sensor 9 can include a radio frequency communication node (in this case the sensor 9 can be powered by cable or by battery).

This invention also includes a method of installing on an electrical appliance, such as a dishwasher, a sensor that can detect the presence and/or level of liquid in a compartment of that electrical appliance, and the temperature of the liquid in that compartment of said electrical appliance. The method of installation according to the invention includes a particular phase where the sensor is applied to the outside of a wall of the compartment, in particular on the outside of a lateral wall of the compartment. The installation method according to the invention can be used advantageously when the electrical appliance is a dishwasher and the compartment is a wash and/or rinse tank of that dishwasher or a collection trap located on the bottom of that tank.

Application of the sensor on the outside of a wall of the compartment, in particular on the outside of a wall of a dishwasher trap, ensures significant benefits (suffice it to consider ease of installation, maintenance and replacement of the sensor). Advantageously, the sensor includes at least one sensing element, in particular of the capacitive type, suitable for use as a sensor to detect the presence and/or absence and/or level of liquid in the dishwasher trap. In this case, the method according to this invention advantageously includes the sub-phase of placing the sensor in relation to the trap so that the sensing element is positioned adjacent to the walls of the trap, to make the output signal variable based on the presence or absence of liquid in the trap and/or variable based on the level of liquid in the trap.

One example of an embodiment of the installation method according to this invention is shown in FIG.3. According to this form of embodiment, the application of the sensor 9 includes a sub-phase of gluing the sensor 9 to the outside surface of a wall of the trap 1. The material used to glue the sensor 9 is notably a thermally conductive material with a thermal conductivity greater than 1 W/(m·K). Advantageously, this gluing is through a sheet 55 of double-sided tape made of thermally conductive material interposed between the outside surface of a lateral wall of the trap 1 and the face of the sensor 9 on which the first sensing element 7 is positioned.

In addition or in the alternative to the sub-phase of gluing, applying the sensor 9 to the outside surface of a wall of the trap 1 includes a sub-phase of fitting and/or affixing by means of one or more screws, so that the sensor is mounted by fitting it into and/or screwing it into the wall of the trap 1.

Advantageously, the installation method according to the invention may include said sub-phase of gluing or a sub-phase of mounting by fitting and/or affixing through one or more screws. Gluing by means of a double-sided tape sufficiently guarantees the stability and durability of the application of the sensor 9 to the trap 1. Nevertheless, to affix the sensor 9 to the trap 1 in a more stable and long-lasting manner, gluing can be appropriately reinforced by mechanical connections.

The sensor 9 can be equipped with means for affixing, for example at least one protrusion and/or at least one recess and/or at least one hole made in said support, that suitably work together with the corresponding means for affixing created on the trap 1, to allow the sensor 9 to be fitted into and/or screwed into the wall of the compartment, in particular of the trap 1. In a form of implementation reported merely as one example, the means of affixing the sensor 9 include a first recess 61 and a second recess 62 made on an edge of the support 10 and a hole 63 in the support 10 near the edge opposite the one on which the first recess 61 and the second recess 62 are made. The first recess 61 and the second recess 62 are configured to bind the sensor 9 to a first fork connection 68 and to a second fork connection 69 made of one piece with the trap 1, while the hole 63 is configured to permit a screw 60 to pass through and then be screwed into a housing 67 on the trap 1 (alternatively, the hole 63 can be used to fit in a boss made of one piece with the trap 1).

In light of what has been described and shown, it can be seen that by making level and temperature sensors in the form of an integrated sensor applicable to an easily accessible area of the trap 1 such as its outer surface, this invention achieves the purpose of guaranteeing maximum ease of installation and any maintenance or replacement operations, thus significantly reducing the costs of manufacturing dishwashers in which these sensors are installed. It can also be seen that this invention also achieves the purpose of guaranteeing that the level and temperature sensors have maximum resistance to wear and tear and corrosion. It can also be seen that the level and temperature sensors according to this invention are distinguished by optimal precision and accuracy.

Again in light of what has been described and shown, it can be seen that this invention achieves the purpose of making sensors based on capacitive technology as immune as possible to interfering inputs. This immunity to interfering inputs, in particular the disruption consisting of temperature, is extremely advantageous, especially when capacitive sensors are installed in a dishwasher to detect the presence and/or level of liquid in the trap. It can also be seen that this invention achieves the purpose of making capacitive sensors multifunctional. The sensors according to this invention are in fact capable of detecting not only the presence and/or level of liquid, but can make at least one additional detection and are also capable of adequately coding these detections, so that they can be unequivocally interpreted by the control systems with which these sensors interface. It can further be seen that this invention achieves the purpose of configuring the sensors in order to guarantee ease of installation and maintenance, increase resistance to wear and tear, and reduce production costs.

## Claims

1. A sensor device (9) predisposed for installation in an electrical user, such as a dishwashing machine, and suitable to detect both the presence and/or the level of a liquid in a containment compartment of said electrical user and the temperature of said liquid in said containment compartment of said electrical user, said sensor device (9) comprising:
- at least a first sensitive element (7) capable of generating an output signal variable in relation to the presence or to the absence of said liquid in said containment compartment and/or variable in relation to the level of said liquid in said containment compartment;
- a temperature probe (8) capable of generating an output signal variable in relation to the temperature of said liquid in said containment compartment and
- a support (10) on which said first sensitive element (7) and said temperature probe (8) are arranged,
**characterised in that**
said sensor device (9) is configured to be applied outside a wall of said containment compartment, in particular outside a side wall of said containment compartment.

2. The sensor device (9) according to claim 1, wherein said first sensitive element (7) is of the capacitive type and is arranged on said support (10) in a position such that, once said sensor device (9) is installed in said electrical user, the electrical capacitance of said first sensitive element (7) is susceptible to variations in the presence and/or in the level of said liquid in said containment compartment,
wherein in particular said first sensitive element (7) is arranged on the face of said support (10) which, once said sensor device (9) is installed in said electrical user, is adjacent to said wall of said containment compartment, the face of said support (10) on which said first sensitive element (7) is arranged being preferably a substantially flat surface.

3. The sensor device (9) according to claim 1 or claim 2, wherein said temperature probe (8) is of the NTC type and is arranged on said support (10) in a position such that, once said sensor device (9) is installed in said electrical user, the electrical resistance of said temperature probe (8) is susceptible to variations in the temperature of said liquid in said containment compartment and/or
wherein the distance between said first sensitive element (7) and said temperature probe (8) is comprised between 20 and 30 mm.

4. The sensor device (9) according to any one of the preceding claims, further comprising a second sensitive element (77) of the capacitive type, said second sensitive element (77) being arranged on said support (10) in a position such that, once said sensor device (9) is installed in said electrical user, the electrical capacitance of said second sensitive element (77) is not susceptible to variations in the presence and/or in the level of said liquid in said containment compartment.

5. The sensor device (9) according to claim 4, wherein said second sensitive element (77) is arranged on the face of said support (10) opposite the face of said support (10) on which said first sensitive element (7) is arranged.

6. The sensor device (9) according to any one of the preceding claims, wherein said support (10) is made of isolating material,
wherein in particular a thermal bridge is obtained in a portion of said support (10), in particular in the form of plated holes (85), said thermal bridge being preferably adjacent to said temperature probe (8) and/or
wherein in particular at least a portion of said support (10) is made of flexible material, said second sensitive element (77) being preferably arranged on the portion in flexible material of said support (10),
wherein in particular the portion in flexible material of said support (10), once said sensor device (9) is installed in said electrical user, forms the lower portion of said support (10), being preferably arranged at a lower height than the bottom wall of said containment compartment.

7. The sensor device (9) according to any one of the preceding claims, further comprising an electronic control unit, in particular a microcontroller (3), said electronic control unit being operationally connected to said first sensitive element (7) and/or to said second sensitive element (77) and/or to said temperature probe (8), said sensor device (9) optionally comprising a programming and debugging socket (45) operationally connected to said electronic control unit and/or
further comprising interfacing means for interfacing with a control system of said electrical user, in particular a connector preferably of the edge type and/or a radiofrequency communications node, said interfacing means being operationally connected to said first sensitive element (7) and/or to said second sensitive element (77) and/or to said temperature probe (8) and/or to said electronic control unit and/or
further comprising fixing means for fixing said sensor device (9) to said wall of said containment compartment, said fixing means preferably comprising at least one protrusion and/or at least one recess and/or at least one hole (63) afforded in said support (10).

8. A sensor device predisposed for installation in an electrical user, such as a dishwashing machine, and suitable to detect the presence and/or the level of a liquid in a containment compartment of said electrical user, said sensor device comprising:
- a first sensitive element (7) of the capacitive type;
- a second sensitive element (77) of the capacitive type and
- an electronic control unit, in particular a microcontroller (3), operationally connected to said first sensitive element (7) and to said second sensitive element (77),
**characterised in that**
said electronic control unit is configured to determine the presence or the absence of liquid in said containment compartment and/or the possible reaching of a predetermined level by said liquid in said containment compartment, on the basis of the difference between a first parameter (p) and a second parameter (s), said first parameter (p) being representative of the electrical capacitance of said first sensitive element (7) and said second parameter (s) being representative of the electrical capacitance of said second sensitive element (77).

9. The sensor device according to claim 8, wherein said electronic control unit is configured to determine the presence or the absence of liquid in said containment compartment and/or the possible reaching of a predetermined level by said liquid in said containment compartment, by comparing said difference between said first parameter (p) and said second parameter (s) with a first predefined value,
said sensor device being in particular further suitable to detect the occurrence of any deposits on said containment compartment and/or of any contaminants in said containment compartment, wherein said electronic control unit is configured to determine the presence or the absence of liquid in said containment compartment and/or the possible reaching of a predetermined level by said liquid in said containment compartment in combination with the occurrence of deposits on said containment compartment and/or of contaminants in said containment compartment, by comparing said difference between said first parameter (p) and said second parameter (s) with a second predefined value, said second predefined value preferably being lower than said first predefined value and/or
wherein said electronic control unit is configured to determine the switching from a condition of absence of liquid in said containment compartment to a condition of presence of liquid in said containment compartment and/or the switching from a condition of level of said liquid in said containment compartment being lower than said predetermined level to a condition of level of said liquid in said containment compartment being equal to or greater than said predetermined level by comparing said difference between said first parameter (p) and said second parameter (s) with a third predefined value and wherein said electronic control unit is configured to determine the switching from a condition of presence of liquid in said containment compartment to a condition of absence of liquid in said containment compartment and/or the switching from a condition of level of said liquid in said containment compartment being equal to or greater than said predetermined level to a condition of level of said liquid in said containment compartment being lower than said predetermined level by comparing said difference between said first parameter (p) and said second parameter (s) with a fourth predefined value, said third predefined value being preferably greater than said fourth predefined value,
said sensor device being in particular further suitable to detect the occurrence of any deposits on said containment compartment and/or of any contaminants in said containment compartment, wherein said electronic control unit is configured to determine the switching from a condition of absence of liquid in said containment compartment to a condition of presence of liquid in said containment compartment in combination with the occurrence of deposits on said containment compartment and/or of contaminants in said containment compartment and/or the switching from a condition of level of said liquid in said containment compartment being lower than said predetermined level to a condition of level of said liquid in said containment compartment being equal to or greater than said predetermined level in combination with the occurrence of deposits on said containment compartment and/or of contaminants in said containment compartment by comparing said difference between said first parameter (p) and said second parameter (s) with a fifth predefined value and wherein said electronic control unit is configured to determine the switching from a condition of presence of liquid in said containment compartment to a condition of absence of liquid in said containment compartment in combination with the occurrence of deposits on said containment compartment and/or of contaminants in said containment compartment and/or the switching from a condition of level of said liquid in said containment compartment being equal to or greater than said predetermined level to a condition of level of said liquid in said containment compartment being lower than said predetermined level in combination with the occurrence of deposits on said containment compartment and/or of contaminants in said containment compartment by comparing said difference between said first parameter (p) and said second parameter (s) with a sixth predefined value, said fifth predefined value being preferably greater than said sixth predefined value, said fifth predefined value being preferably lower than said third predefined value, said sixth predefined value being preferably lower than said fourth predefined value.

10. The sensor device according to claim 8 or claim 9, said sensor device being further suitable to detect the absence or the occurrence of any leaks inside said electrical user, in particular from said containment compartment, wherein said electronic control unit is configured to determine the absence or the occurrence of any leaks inside said electrical user, in particular from said containment compartment, on the basis of said second parameter (s),
wherein in particular said electronic control unit is configured to determine the absence or the occurrence of any leaks inside said electrical user, in particular from said containment compartment, by comparing said second parameter (s) with a predefined threshold value and/or
wherein said electronic control unit is configured to perform a predefined number of acquisitions of the output signal from said first sensitive element (7) and the output signal from said second sensitive element (77) and to calculate said first parameter (p) and said second parameter (s) respectively as the mean value of the acquisitions of the output signal from said first sensitive element (7) and as the mean value of the acquisitions of the output signal from said second sensitive element (77) and/or
wherein said control unit is configured to generate at least one output signal of the digital type, the logic level of said output signal in the case of presence of liquid in said containment compartment and/or of reaching of said predetermined level by said liquid in said containment compartment differing from the logic level of said output signal in the case of absence of liquid in said containment compartment and/or of non-reaching of said predetermined level by said liquid in said containment compartment, the logic level of said output signal in the case of presence of liquid in said containment compartment and/or of reaching of said predetermined level by said liquid in said containment compartment being preferably high, the logic level of said output signal in the case of absence of liquid in said containment compartment and/or of non-reaching of said predetermined level by said liquid in said containment compartment being preferably low,
wherein in particular said control unit is configured to generate said output signal as a continuous signal in case of detection both of absence of deposits on said containment compartment and/or of contaminants in said containment compartment and of absence of leaks inside said electrical user, in particular from said containment compartment, and is configured to generate said output signal as a periodic signal in case of detection of the occurrence of deposits on said containment compartment and/or of contaminants in said containment compartment and/or in case of detection of the occurrence of leaks inside said electrical user, in particular from said containment compartment, the frequency of said output signal in case of detection of the occurrence of deposits on said containment compartment and/or of contaminants in said containment compartment preferably differing from the frequency of said output signal in case of detection of the occurrence of leaks inside said electrical user, in particular from said containment compartment.

11. The sensor device according to any one of the claims 8 to 10, said sensor device further comprising a support, said support being in particular in isolating material, wherein said first sensitive element (7) is disposed on said support in a position such that, once said sensor device has been installed in said electrical user, the electrical capacitance of said first sensitive element (7) is susceptible to variations in the presence and/or in the level of said liquid in said containment compartment and wherein said second sensitive element (77) is disposed on said support in a position such that, once said sensor device has been installed in said electrical user, the electrical capacitance of said second sensitive element (77) is not susceptible to variations in the presence and/or in the level of said liquid in said containment compartment, means of shielding being preferably associated to said support which are adapted to render the electrical capacitance of said first sensitive element (7) not susceptible to variations in the presence and/or in the level of said liquid in said containment compartment until the reaching of said predetermined level,
wherein in particular said second sensitive element (77) is disposed on said support in a position such that, once said sensor device has been installed in said electrical user, said second sensitive element (77) is at a lower height relative to said containment compartment,
wherein optionally at least the portion of said support on which said second sensitive element (77) is disposed is flexible.

12. The sensor device according to any one of the claims 8 to 11, said sensor device being further suitable to detect the temperature of said liquid in said containment compartment, said sensor device further comprising a third sensitive element capable of generating an output signal variable in relation to the temperature, said third sensitive element preferably comprising a temperature probe (8) of the NTC type,
wherein in particular said first sensitive element (7) and said third sensitive element are disposed on said support in positions such that, once said sensor device has been installed in said electrical user, said third sensitive element is at a lower height relative to said first sensitive element (7),
wherein optionally said first sensitive element (7) and said third sensitive element are disposed on said support in positions such that, once said sensor device has been installed in said electrical user, the difference in height between said first sensitive element (7) and said third sensitive element is comparable with the difference in height between said third sensitive element and a bottom wall of said containment compartment.

13. The sensor device according to any one of the claims 8 to 12, said sensor device further comprising a case (92), said case (92) being configured to be inserted into said containment compartment through an opening afforded in a wall of said containment compartment and being preferably made in a material resistant to water and/or to corrosion such as calcium-filled polypropylene or talc-filled polypropylene, in particular in a bottom wall of said containment compartment, wherein said first sensitive element (7) is disposed inside said case (92) and wherein said second sensitive element (77) is disposed outside said case (92) and wherein optionally a resin in electrically isolating material, for example an epoxy resin or polyurethane resin, is interposed between said first sensitive element (7) and said case (92) or
wherein said sensor device is configured to be applied outside a wall of said containment compartment, in particular outside a side wall of said containment compartment.

14. A method of detection of the presence and/or of the level of a liquid in a containment compartment of an electrical user, such as a dishwashing machine, comprising the steps of:
i) acquiring a first parameter (p) from a first sensitive element (7), said first sensitive element (7) being in particular of the capacitive type;
ii) acquiring a second parameter (p) from a second sensitive element (77), said second sensitive element (77) being in particular of the capacitive type;
iii) calculating the difference between said first parameter (p) and said second parameter (s) and
iv) obtaining a piece of information relating to the presence or absence of liquid in said containment compartment and/or the possible reaching of a predetermined level by said liquid in said containment compartment on the basis of said difference between said first parameter (p) and said second parameter (s).

15. An encoding method for encoding information relating to a containment compartment of an electrical user, such as a dishwashing machine, by means of a digital signal, comprising the steps of:
A) setting the logic level of said digital signal in order to encode a first piece of information and
B) generating said digital signal as a continuous signal or as a periodic signal in order to encode at least a second piece of information.
